(19) Europäisches Patentamt
European Patent Office
Office européen des brevets

(11) **EP 4 406 993 A1**

(12) **EUROPEAN PATENT APPLICATION**
published in accordance with Art. 153(4) EPC

(43) Date of publication:
**31.07.2024 Bulletin 2024/31**

(21) Application number: **22872878.8**

(22) Date of filing: **20.09.2022**

(51) International Patent Classification (IPC):
***C08G 81/00*** (2006.01) ***B01J 20/24*** (2006.01)
***B01J 20/26*** (2006.01) ***C02F 1/28*** (2023.01)
***C08B 3/14*** (2006.01) ***C08F 8/14*** (2006.01)
***C08F 8/30*** (2006.01) ***C08F 8/34*** (2006.01)
***C08F 16/06*** (2006.01) ***C08G 59/02*** (2006.01)
***C08G 79/00*** (2006.01)

(52) Cooperative Patent Classification (CPC):
**B01J 20/24; B01J 20/26; C02F 1/28; C08B 3/14; C08F 8/14; C08F 8/30; C08F 8/34; C08F 16/06; C08G 59/02; C08G 79/00; C08G 81/00;** Y02P 10/20

(86) International application number:
**PCT/JP2022/034936**

(87) International publication number:
**WO 2023/048124 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.09.2021 PCT/JP2021/034658**

(71) Applicants:
- **National University Corporation Kanazawa University**
  **Ishikawa 920-1192 (JP)**
- **Daicel Corporation**
  **Osaka 530-0011 (JP)**

(72) Inventors:
- **MAEDA, Katsuhiro**
  **Kanazawa-shi, Ishikawa 920-1192 (JP)**
- **NISHIMURA, Tatsuya**
  **Kanazawa-shi, Ishikawa 920-1192 (JP)**
- **TANIGUCHI, Tsuyoshi**
  **Kanazawa-shi, Ishikawa 920-1192 (JP)**
- **DAS, Sandip**
  **Kanazawa-shi, Ishikawa 920-1192 (JP)**
- **FUKUDA, Mayu**
  **Kanazawa-shi, Ishikawa 920-1192 (JP)**
- **HASEGAWA, Hiroshi**
  **Kanazawa-shi, Ishikawa 920-1192 (JP)**
- **MASHIO, Asami**
  **Kanazawa-shi, Ishikawa 920-1192 (JP)**
- **WONG, Kuo Hong**
  **Kanazawa-shi, Ishikawa 920-1192 (JP)**
- **NAKAKUBO, Keisuke**
  **Kanazawa-shi, Ishikawa 920-1192 (JP)**
- **BISWAS, Foni Bushon**
  **Kanazawa-shi, Ishikawa 920-1192 (JP)**
- **ARAI, Takashi**
  **Tokyo 108-8230 (JP)**
- **ENDO, Masaru**
  **Tokyo 108-8230 (JP)**

(74) Representative: **Hoffmann Eitle**
**Patent- und Rechtsanwälte PartmbB**
**Arabellastraße 30**
**81925 München (DE)**

# (54) CROSSLINKED STRUCTURE, METAL SCAVENGING MATERIAL INCLUDING SAID CROSSLINKED STRUCTURE, METHOD FOR RECOVERING METAL USING SAID METAL SCAVENGING MATERIAL, AND METHOD FOR PRODUCING SAID CROSSLINKED STRUCTURE

(57) Provided is a water-insoluble crosslinked structure with an excellent metal-adsorbing effect. The crosslinked structure is formed by crosslinking a first linear polymer and a second linear polymer. The first linear polymer has a plurality of pendant groups represented by Formula (a). The second linear polymer has a plurality of pendant groups represented by Formula (a). Some of the plurality of pendant groups in the first linear polymer and some of the plurality



EP 4 406 993 A1

of pendant groups in the second linear polymer are bonded to each other via a crosslinker. In the formula, ring Z represents a heterocycle containing a nitrogen atom as a heteroatom, $R^1$ represents a single bond or an alkylene group having from 1 to 10 carbons, and $Q^+$ represents a counter cation.

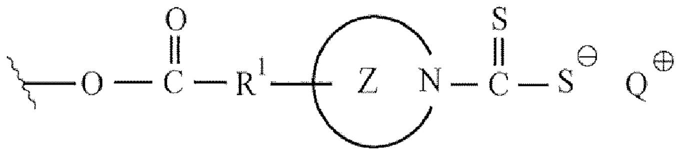

(a)

## Description

### Technical Field

The present disclosure relates to a novel crosslinked structure, a metal-trapping material including the crosslinked structure, a method for recovering a metal using the crosslinked structure, and a method for manufacturing the crosslinked structure. The present disclosure claims priority to PCT/JP 2021/034658 filed on September 21, 2021, the content of which is incorporated herein by reference.

### Background Art

In recent years, valuable metals, such as ruthenium, cobalt, rhodium, iridium, nickel, palladium, platinum, copper, silver, and gold, are frequently used in electronic materials, electronic components, industrial catalysts, metal plating, and the like. In addition, in the medical field, platinum is used in anticancer agents, and palladium is used in dental treatment.

Despite large amounts of valuable metals consumed in Japan as described above, Japan relies on imports for most of those metals. This leads to a desire for recovery and reuse of valuable metals contained in plant effluents and waste from the viewpoint of effective utilization of resources. In addition, it is also demanded to remove toxic metals from water contaminated with toxic metals.

Non-Patent Literature 1 describes a dithiocarbamic acid-type chitosan resin as a metal adsorber for adsorbing copper, molybdenum, silver, tungsten, mercury, and the like by chelate formation, the dithiocarbamic acid-type chitosan resin produced by introducing dithiocarbamate groups as chelating functional groups into crosslinked chitosan, which is produced by crosslinking chitosan using ethylene glycol diglycidyl ether.

### Citation List

#### Non-Patent Literature

Non-Patent Literature 1: BUNSEKI KAGAKU Vol. 52, No. 9, pp. 811-817 (2003)

### Summary of Invention

#### Technical Problem

The present inventors have found the following. The reaction of introducing dithiocarbamate group into the crosslinked chitosan is difficult to proceed probably because of inhibition by gelation of the reaction system. As a result, the resulting dithiocarbamic acid-type chitosan resin has a low amount of the introduced dithiocarbamate group. Such a chitosan resin enables solid-phase extraction but with low metal recovery amount. On the other hand, reducing the degree of crosslinking of the chitosan makes it easier for the reaction of introducing dithiocarbamate groups into the crosslinked chitosan to proceed. However, this makes the resulting dithiocarbamic acid-type chitosan resin easily soluble in water and makes solid-phase extraction difficult.

Thus, an object of the present disclosure is to provide a water-insoluble crosslinked structure having an excellent metal-adsorbing effect.

Another object of the present disclosure is to provide a metal-trapping material that can efficiently recover a metal by solid-phase extraction.

Yet another object of the present disclosure is to provide a method for recovering a metal, the method simply and efficiently recovering a metal dissolved in an aqueous solution by solid-phase extraction.

Still another object of the present disclosure is to provide a method for manufacturing a water-insoluble crosslinked structure having an excellent metal-adsorbing effect.

#### Solution to Problem

As a result of diligent studies, the present inventors have found the following. Introducing an amino acid derivative with a protected nitrogen atom into a linear polymer having a plurality of hydroxyl groups by esterification reaction and chemically converting the substituents on the nitrogen atoms into dithiocarbamate groups enables efficient introduction of the dithiocarbamate groups into the linear polymer to form a modified polymer containing dithiocarbamate groups with a high degree of substitution. Furthermore, bonding two or more dithiocarbamate groups in the resulting modified polymer via a crosslinker produces a crosslinked structure with an excellent metal-adsorbing effect and insoluble in

water. The present disclosure has been completed based on these findings.

That is, the present disclosure provides a crosslinked structure formed by crosslinking a first linear polymer and a second linear polymer. The first linear polymer has a plurality of pendant groups represented by Formula (a). The second linear polymer has a plurality of pendant groups represented by Formula (a). The first linear polymer and the second linear polymer are crosslinked by bonding some of the plurality of pendant groups in the first linear polymer and some of the plurality of pendant groups in the second linear polymer to each other via a crosslinker:

[Chem. 1]

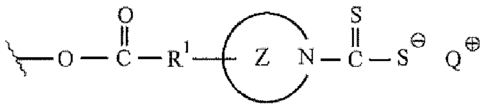

(a)

where

ring Z represents a heterocycle containing a nitrogen atom as a heteroatom,
$R^1$ represents a single bond or an alkylene group having from 1
to 10 carbons, and
$Q^+$ represents a counter cation.

The present disclosure also provides the crosslinked structure, in which among the plurality of pendant groups, a molar ratio of a group not bonded to another pendant group via a crosslinker to a group bonded to another pendant group via a crosslinker (the former/the latter) is from 100/0.5 to 100/20.

The present disclosure also provides the crosslinked structure, in which the crosslinker is an epoxy-based crosslinker.

The present disclosure also provides the crosslinked structure, in which the crosslinker is a metal-based crosslinker.

The present disclosure also provides the crosslinked structure, in which the linear polymer is cellulose or poly(vinyl alcohol).

The present disclosure also provides the crosslinked structure, in which the linear polymer having a plurality of pendant groups represented by Formula (a) is a modified cellulose with a total average degree of substitution of the pendant groups represented by Formula (a) of 0.1 to 3.0.

The present disclosure also provides the crosslinked structure, in which the linear polymer having a plurality of pendant groups represented by Formula (a) is a modified poly(vinyl alcohol) with a degree of substitution of the pendant groups represented by Formula (a) of 1 mol% or greater.

The present disclosure also provides a metal-trapping material including the crosslinked structure.

The present disclosure also provides the metal-trapping material, in which the metal-trapping material is a trapping material for at least one metal selected from titanium, vanadium, manganese, iron, cobalt, nickel, copper, zinc, gallium, arsenic, selenium, cadmium, indium, lead, bismuth, ruthenium, rhodium, iridium, palladium, platinum, silver, and gold.

The present disclosure also provides a method for recovering a metal, the method including adsorbing a metal dissolved in an aqueous solution on the metal-trapping material to recover the metal.

The present disclosure also provides a method for manufacturing the crosslinked structure, the method including:

[1] reacting a linear polymer (I) having a plurality of hydroxyl groups with a compound represented by Formula (2):

[Chem. 2]

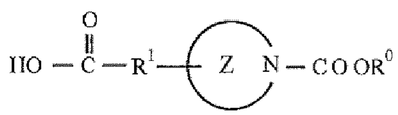

(2)

where

ring Z represents a heterocycle containing a nitrogen atom as a heteroatom,
$R^1$ represents a single bond or an alkylene group having from 1 to 10 carbons, and

$R^0$ represents a monovalent hydrocarbon group or a monovalent heterocyclic group,

to produce a modified polymer (II) in which two or more hydroxyl groups in the linear polymer (I) are replaced by groups represented by Formula (b):

[Chem. 3]

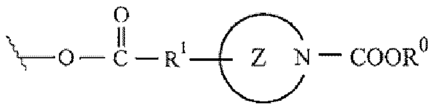

(b)

where
ring Z, $R^0$, and $R^1$ are the same as described above;
[2] deprotecting an imino group in the modified polymer (II) to produce a modified polymer (III) in which two or more hydroxyl groups in the linear polymer (I) are replaced by groups represented by Formula (c):

[Chem. 4]

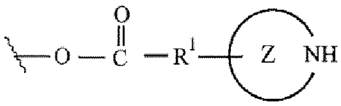

(c)

where
ring Z and $R^1$ are the same as described above; and
[3] reacting the modified polymer (III) with a base and a crosslinker in the presence of a sulfur compound.

Advantageous Effects of Invention

The crosslinked structure of the present disclosure has characteristics of easily adsorbing a metal ion classified as a soft acid or an intermediate acid in the HSAB theory (e.g., a valuable metal ion and a toxic metal ion) and hardly adsorbing a metal ion classified as a hard acid (e.g., an alkali metal ion and an alkaline earth metal ion).

Utilization of the crosslinked structure can selectively adsorb and recover a valuable metal ion and a toxic metal ion from a solution in which a valuable metal ion, a toxic metal ion, an alkali metal ion, and an alkaline earth metal ion are mixed.

Furthermore, combustion of the crosslinked structure on which a metal ion has been adsorbed can easily recover the metal.

Thus, the crosslinked structure can be suitably used as a valuable metal recovery material and/or a toxic metal removal material.

The crosslinked structure can efficiently and selectively adsorb and recover a metal (particularly, a valuable metal) from a plant effluent and waste. In addition, the recovered metal (particularly, a valuable metal) can be reutilized.

Furthermore, the crosslinked structure can efficiently and selectively adsorb and remove a toxic metal from water contaminated with the toxic metal. Moreover, combusting the crosslinked structure on which a toxic metal has been adsorbed to reduce the volume can reduce the cost of disposal, such as landfill.

Brief Description of Drawings

FIG. 1 is a chart showing IR spectra of DMC-Pro-Epo3, 6, and 9 produced in examples and DMC-Pro produced in a comparative example.
FIG. 2 is a chart showing IR spectra of DMC-ProNa-Epo3, 6, and 9 produced in examples and DMC-ProNa produced in a comparative example.
FIG. 3 is a chart showing IR spectra of DMC-Pro-Fe3, 6, and 10 produced in examples and DMC-Pro produced in a comparative example.
FIG. 4 is a chart showing IR spectra of DMC-ProNa-Fe3, 6, and 10 produced in examples and DMC-ProNa produced in a comparative example.

FIG. 5 is a chart showing IR spectra of PVA-Pro-Epo3 produced in an example and PVA-Pro produced in a comparative example.

FIG. 6 is a chart showing IR spectra of DMC-ProLi-Epo3, 6, and 9 produced in examples and DMC-ProLi produced in a comparative example.

FIG. 7 is a chart showing IR spectra of DMC-ProK-Epo3, 6, and 9 produced in examples and DMC-ProK produced in a comparative example.

Description of Embodiments

Crosslinked Structure

In the crosslinked structure, some pendant groups in a first linear polymer having a plurality of pendant groups represented by Formula (a) and some pendant groups in a second linear polymer having a plurality of pendant groups represented by Formula (a) are bonded to each other via a crosslinker to form a crosslinked configuration:

[Chem. 5]

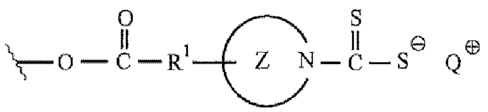

(a)

where

ring Z represents a heterocycle containing a nitrogen atom as a heteroatom,
$R^1$ represents a single bond or an alkylene group having from 1 to 10 carbons, and
$Q^+$ represents a counter cation.

Ring Z is a heterocycle containing a nitrogen atom as a heteroatom. Ring Z may contain a heteroatom other than the nitrogen atom.

Ring Z is preferably a heterocycle containing only a nitrogen atom as a heteroatom (particularly, a non-aromatic heterocycle). In addition, ring Z is, for example, a 3- to 10-membered ring, in particular, preferably a 4- to 8-membered ring, and especially preferably a 4- to 6-membered ring.

Examples of ring Z include 5-membered rings, such as a pyrrolidine ring; and 6-membered rings, such as a piperidine ring and a piperazine ring.

Examples of the alkylene group having from 1 to 10 carbons in $R^1$ include linear or branched alkylene groups, such as a methylene group, a methylmethylene group, a dimethylmethylene group, an ethylene group, a 2-methylethylene group, a 1,2-dimethylethylene group, a propylene group, a trimethylene group, and a 2-methyl-trimethylene group.

$R^1$ is preferably a single bond or an alkylene group having 1 or 2 carbons.

$Q^+$ represents a counter cation, and examples include alkali metal cations, such as a lithium cation, a sodium cation, and a potassium cation; and quaternary ammonium cations represented by Formula (q1):

[Chem. 6]

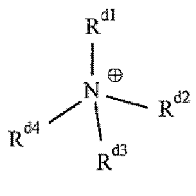

(q1)

where
$R^{d1}$ to $R^{d4}$ are the same or different and represent an alkyl group having from 1 to 10 carbons.

Examples of the alkyl group having from 1 to 10 carbons for $R^{d1}$ to $R^{d4}$ include linear or branched alkyl groups, such as a methyl group, an ethyl group, a propyl group, an isopropyl group, a butyl group, an isobutyl group, an s-butyl group, a t-butyl group, and a pentyl group.

$R^{d1}$ to $R^{d4}$ are preferably alkyl groups having from 1 to 3 carbons.

$Q^+$ is preferably an alkali metal cation and particularly a sodium cation in terms of a particularly excellent metal-adsorbing effect.

An example of the linear polymer having a plurality of pendant groups represented by Formula (a) includes a linear polymer having a plurality of hydroxyl groups with two or more hydroxyl groups replaced by the pendant groups represented by Formula (a). Examples of the linear polymer include polysaccharides and poly(vinyl alcohol).

The polysaccharide is a linear polymer containing monosaccharide units linked by glycosidic bonds. Examples of the monosaccharide include glucose, galactose, mannose, and fructose.

Examples of the polysaccharide include cellulose, starch, pectin, amylose, amylopectin, glycogen, glucomannan, chitin, and chitosan. Some hydroxyl groups in the polysaccharide may have been subjected to treatment, such as acylation or carboxyalkylation.

The polysaccharide is preferably cellulose in terms of a large number of hydroxyl groups per unit weight and low solubility in water.

Thus, the linear polymer having the plurality of pendant groups represented by Formula (a) is preferably

a modified cellulose, in which three hydroxyl groups in a repeating unit are replaced by the pendant groups represented by Formula (a) in such a manner that a total average degree of substitution of the hydroxyl groups with the pendant groups represented by Formula (a) is, for example, 0.1 or greater; and/or

a modified poly(vinyl alcohol), in which one hydroxyl group in a repeating unit is replaced by the pendant groups represented by Formula (a) in such a manner that the percentage of the substitution among all hydroxyl groups is, for example, 1 mol% or greater.

The modified cellulose is, for example, a polymer having a repeating unit represented by Formula (I). In Formula (I), $R^a$s are the same or different and are a hydroxyl group or the pendant group represented by Formula (a). At least one of all $R^a$s contained in the modified cellulose is the pendant group represented by Formula (a). In addition to the repeating unit represented by Formula (I), the modified cellulose may have another repeating unit.

[Chem. 7]

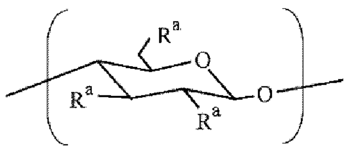

(I)

The modified poly(vinyl alcohol) is a polymer having a repeating unit represented by Formula (I'). In Formula (I') below, $R^a$ is the pendant group represented by Formula (a).

[Chem. 8]

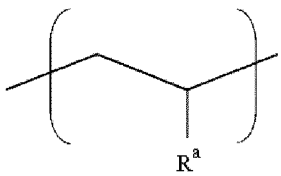

(I')

In addition to the repeating unit represented by Formula (I'), the modified poly(vinyl alcohol) may have another repeating unit. Examples of another repeating unit include a repeating unit represented by Formula (I"). In Formula (I"), $R^{a'}$ is a hydroxyl group or an acetoxy group.

[Chem. 9]

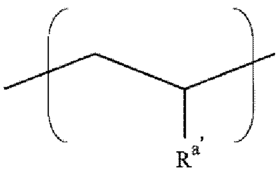

(I'')

In a case where the linear polymer is the modified cellulose, the total average degree of substitution of the pendant group represented by Formula (a) is, for example, from 0.1 to 3.0, and in terms of a particularly excellent metal-adsorbing effect, the total average degree of substitution is preferably from 1.0 to 3.0 and particularly preferably from 2.0 to 3.0.

In a case where the linear polymer is the modified poly(vinyl alcohol), the degree of substitution of the pendant group represented by Formula (a) is, for example, 1 mol% or greater, and in terms of a particularly excellent metal-adsorbing effect, the degree of substitution is preferably 50 mol% or greater and particularly preferably 70 mol% or greater. The upper limit of the degree of substitution is 100 mol%.

The pendant group represented by Formula (a) is preferably a pendant group represented by Formula (a-1) or a pendant group represented by Formula (a-2). In the formulas below, $R^1$ and $Q^+$ are the same as described above.

[Chem. 10]

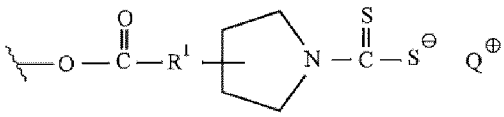

(a-1)

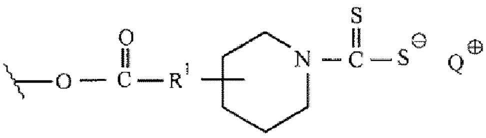

(a-2)

The pendant group represented by Formula (a) is particularly preferably a pendant group represented by Formula (a-1') or a pendant group represented by Formula (a-2'). In the formulas below, $Q^+$ is the same as described above.

[Chem. 11]

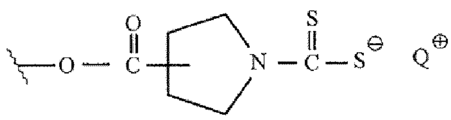

(a-1')

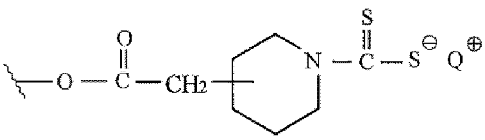

(a-2')

The crosslinker is a compound for linking a pendant group represented by Formula (a) in a first linear polymer and a pendant group represented by Formula (a) in a second linear polymer to form a structure in which the two linear polymers are crosslinked via the linking part. Examples include organic crosslinkers, such as epoxy-based crosslinkers, acrylic-based crosslinkers, vinyl ether-based crosslinkers, and amino-based crosslinkers; and inorganic crosslinkers, such as metal-based crosslinkers.

The epoxy-based crosslinker is a compound having two or more epoxy groups, and examples include diglycidyl ether, ethylene glycol diglycidyl ether, polyethylene glycol diglycidyl ether, propylene glycol diglycidyl ether, polypropylene

glycol diglycidyl ether, 1,4-butanediol diglycidyl ether, 1,4-cyclohexanedimethanol diglycidyl ether, poly(glycidyl methacrylate), trimethylolethane triglycidyl ether, trimethylolpropane triglycidyl ether, pentaerythritol tetraglycidyl ether, and triglycidyl isocyanurate.

The acrylic-based crosslinker is a compound having two or more acrylic groups, and examples include allyl (meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, 1,3 -butylene glycol di(meth)acrylate, and 1,4-butylene glycol di(meth)acrylate.

Examples of the vinyl ether-based crosslinker include triallyl cyanurate and triallyl isocyanurate.

Examples of the amino-based crosslinker include hexamethylene diamine and triethanolamine.

The metal-based crosslinker is a compound producing a polyvalent metal ion forming an ionic bond with a dithiocarbamate group, and examples include iron chloride, copper chloride, manganese chloride, zinc chloride, and cobalt chloride.

The crosslinker is preferably an organic crosslinker in terms of less residue after combustion and is particularly preferably an epoxy-based crosslinker and/or an acrylic-based crosslinker and especially preferably an epoxy-based crosslinker.

Among the pendant groups in the linear polymer constituting the crosslinked structure, the molar ratio of a group not bonded to the pendant group in another linear polymer each other via the crosslinker, that is, a free pendant group, to a group bonded to the pendant group in another linear polymer each other via the crosslinker (the former/the latter) is, for example, from 100/0.5 to 100/20, and in terms of being able to impart insolubility in water and improve solid-phase adsorption properties while maintaining a high metal-adsorbing effect, the ratio is preferably from 100/0.5 to 100/15, particularly preferably from 100/0.5 to 100/10, and most preferably from 100/1 to 100/8.

The shape of the crosslinked structure is not particularly limited as long as the effect of the present disclosure is not impaired, and examples include a sheet shape, a spherical shape (such as a true spherical shape, a substantially true spherical shape, and an elliptically spherical shape), a polyhedral shape, a rod shape (such as a cylindrical shape and a prismatic shape), a flaky shape, and an irregular shape.

The crosslinked structure has the pendant group represented by Formula (a), and the pendant group contains a dithiocarbamate group classified as a soft base in the HSAB theory. Thus, the crosslinked structure has an excellent adsorption capability for a metal ion classified as a soft acid or an intermediate acid in the HSAB theory (e.g., a valuable metal ion, preferably at least one metal ion selected from a titanium ion, a vanadium ion, a manganese ion, an iron ion, a cobalt ion, a nickel ion, a copper ion, a zinc ion, a gallium ion, an arsenic ion, a cadmium ion, an indium ion, a lead ion, a bismuth ion, a ruthenium ion, a rhodium ion, an iridium ion, a palladium ion, a platinum ion, a silver ion, and a gold ion).

The (saturated) adsorption capacity of the crosslinked structure for a metal ion classified as a soft acid or an intermediate acid in the HSAB theory (e.g., a valuable metal ion) is, for example, 1 mol/kg or greater, preferably 2 mol/kg or greater, more preferably 2.5 mol/kg or greater, even more preferably 3 mol/kg or greater, particularly preferably 3.5 mol/kg or greater, and most preferably 4 mol/kg or greater.

The adsorption capacity of the crosslinked structure for a palladium ion is, for example, 1 mol/kg or greater, preferably 1.5 mol/kg or greater, and more preferably 2 mol/kg or greater.

The adsorption capacity of the crosslinked structure for a platinum ion is, for example, 1 mol/kg or greater and preferably 1.5 mol/kg or greater.

The adsorption capacity of the crosslinked structure for a silver ion is, for example, 1 mol/kg or greater, preferably 2 mol/kg or greater, more preferably 3 mol/kg or greater, and particularly preferably 3.5 mol/kg or greater.

The adsorption capacity of the crosslinked structure for a gold ion is, for example, 1 mol/kg or greater, preferably 1.5 mol/kg or greater, more preferably 2 mol/kg or greater, and particularly preferably 2.5 mol/kg or greater.

The recovery percentage of a metal ion classified as a soft acid or an intermediate acid in the HSAB theory (e.g., a valuable metal ion, preferably an ion of at least one metal selected from vanadium, iron, cobalt, nickel, copper, zinc, arsenic, selenium, cadmium, lead, bismuth, rhodium, iridium, palladium, platinum, silver, and gold) by the crosslinked structure is, for example, 85% or greater, preferably 90% or greater, and particularly preferably 95% or greater.

The recovery percentage of a noble metal ion (e.g., a metal ion selected from a cobalt ion, an iridium ion, a nickel ion, a palladium ion, a platinum ion, a copper ion, a silver ion, and a gold ion) by the crosslinked structure is, for example, 85% or greater, preferably 90% or greater, and particularly preferably 95% or greater.

In the present disclosure, the recovery percentage of a metal ion is a recovery percentage when 5 mg of the crosslinked structure is immersed in an aqueous solution (pH 3) with a metal ion concentration of 10 $\mu$mol/L at 25°C and stirred at 200 rpm for 20 minutes, and is calculated from an equation described in Examples.

The crosslinked structure has the pendant group represented by Formula (a) and thus has an excellent adsorption capability for a metal ion classified as a soft acid or an intermediate acid in the HSAB theory (e.g., a toxic metal ion, preferably a metal ion selected from an arsenic ion, a cadmium ion, and a lead ion).

The (saturated) adsorption capacity of the crosslinked structure for the toxic metal ion is, for example, 0.2 mol/kg or greater, preferably 0.3 mol/kg or greater, more preferably 0.5 mol/kg or greater, even more preferably 0.6

mol/kg or greater, particularly preferably 1 mol/kg or greater, and most preferably 2 mol/kg or greater.

The adsorption capacity of the crosslinked structure for an arsenic ion is, for example, 0.2 mol/kg or greater, preferably 0.5 mol/kg or greater, and more preferably 1 mol/kg or greater.

The adsorption capacity of the crosslinked structure for a cadmium ion is, for example, 0.5 mol/kg or greater, preferably 1 mol/kg or greater, and more preferably 1.5 mol/kg or greater.

The adsorption capacity of the crosslinked structure for a lead ion is, for example, 0.5 mol/kg or greater, preferably 1 mol/kg or greater, and more preferably 1.5 mol/kg or greater.

The recovery percentage of a toxic metal ion (e.g., an ion of a metal selected from arsenic, cadmium, and lead) by the crosslinked structure is, for example, 85% or greater, preferably 90% or greater, and particularly preferably 95% or greater.

The crosslinked structure has the pendant group represented by Formula (a) and thus has a low adsorption capability for a metal ion classified as a hard acid in the HSAB theory (particularly, at least one ion selected from an alkali metal ion and an alkaline earth metal ion).

The (saturated) adsorption capacity for a metal ion classified as a hard acid in the HSAB theory is, for example, 2.0 mol/kg or less, more preferably 1.6 mol/kg or less, even more preferably 0.8 mol/kg or less, particularly preferably 0.4 mol/kg or less, most preferably 0.1 mol/kg or less, and especially preferably 0.01 mol/kg or less.

The adsorption capacity for an alkali metal ion (e.g., a sodium ion or a potassium ion) is, for example, 1.6 mol/kg or less, preferably 0.8 mol/kg or less, more preferably 0.4 mol/kg or less, even more preferably 0.2 mol/kg or less, and particularly preferably 0.1 mol/kg or less.

The adsorption capacity for an alkaline earth metal ion (e.g., a magnesium ion, a calcium ion, a strontium ion, or a barium ion) is, for example, 1.6 mol/kg or less, preferably 1.0 mol/kg or less, more preferably 0.8 mol/kg or less, even more preferably 0.4 mol/kg or less, particularly preferably 0.2 mol/kg or less, and most preferably 0.1 mol/kg or less.

The recovery percentage of a metal ion classified as a hard acid in the HSAB theory by the crosslinked structure is, for example, 10% or less, preferably 5% or less, particularly preferably 1% or less, and most preferably 0.1% or less.

The recovery percentage of an alkali metal ion (e.g., a sodium ion or a potassium ion) by the crosslinked structure is, for example, 10% or less, preferably 5% or less, particularly preferably 1% or less, and most preferably 0.1% or less.

The recovery percentage of an alkaline earth metal ion (e.g., a magnesium ion, a calcium ion, a strontium ion, or a barium ion) by the crosslinked structure is, for example, 10% or less, preferably 5% or less, and particularly preferably 2% or less.

In addition, the crosslinked structure has the pendant group represented by Formula (a) and thus has a low adsorption capability for a base metal ion, such as an iron ion, an aluminum ion, or a manganese ion.

The (saturated) adsorption capacity for the base metal ion (e.g., an iron ion, an aluminum ion, or a manganese ion) is, for example, 2.0 mol/kg or less, more preferably 1.6 mol/kg or less, preferably 1.0 mol/kg or less, even more preferably 0.8 mol/kg or less, particularly preferably 0.4 mol/kg or less, most preferably 0.1 mol/kg or less, and especially preferably 0.01 mol/kg or less.

The recovery percentage of the base metal ion (particularly, an iron ion, an aluminum ion, or a manganese ion) by the crosslinked structure is, for example, 60% or less, preferably 50% or less, more preferably 45% or less, even more preferably 30% or less, particularly preferably 20% or less, most preferably 10% or less, and especially preferably 5% or less.

The crosslinked structure has a high adsorption capability for a valuable metal ion and/or a toxic metal ion and has a low adsorption capability for other metal ions. Thus, the crosslinked structure can be suitably used for the purpose of selective recovery of a valuable metal ion and a toxic metal ion from an industrial effluent, a mine effluent, hot spring water, or the like containing a valuable metal ion and a toxic metal ion mixed with other ions.

Method for Manufacturing Crosslinked Structure

The crosslinked structure can be manufactured, for example, through [1], [2], and [3] below.

[1] reacting a linear polymer (I) having a plurality of hydroxyl groups with a compound represented by Formula (2):

[Chem. 12]

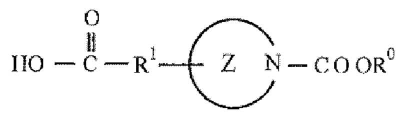

(2)

where

ring Z represents a heterocycle containing a nitrogen atom as a heteroatom,
$R^1$ represents a single bond or an alkylene group having from 1 to 10 carbons, and
$R^0$ represents a monovalent hydrocarbon group or a monovalent heterocyclic group,

to produce a modified polymer (II) in which two or more hydroxyl groups in the linear polymer (I) are replaced by groups represented by Formula (b):

[Chem. 13]

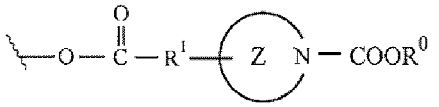

(b)

where
ring Z, $R^0$, and $R^1$ are the same as described above;
[2] deprotecting an imino group in the modified polymer (II) to produce a modified polymer in which two or more hydroxyl groups in the linear polymer (I) are replaced by groups represented by Formula (c):

[Chem. 14]

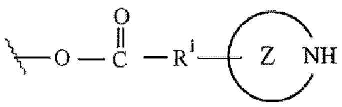

(c)

where
ring Z and $R^1$ are the same as described above; and
[3] reacting the modified polymer (III) with a base and a crosslinker in the presence of a sulfur compound.

$R^0$ in the formula above represents a monovalent hydrocarbon group or a monovalent heterocyclic group.

The hydrocarbon group includes aliphatic hydrocarbon groups, alicyclic hydrocarbon groups, aromatic hydrocarbon groups, and groups produced by bonding these.

Examples of the aliphatic hydrocarbon group include alkyl groups having from 1 to 10 carbons (particularly preferably from 1 to 3 carbons), such as a methyl group, an ethyl group, a propyl group, an isopropyl group, a butyl group, an isobutyl group, an s-butyl group, a t-butyl group, a pentyl group, a hexyl group, and a decyl group; and alkenyl groups having from 2 to 10 carbons (particularly preferably from 2 to 3 carbons), such as a vinyl group, an allyl group, and a 1-butenyl group.

Examples of the alicyclic hydrocarbon group include 3- to 10-membered (particularly preferably 5- to 8-membered) cycloalkyl groups, such as a cyclopropyl group, a cyclobutyl group, a cyclopentyl group, a cyclohexyl group, and a cyclooctyl group; 3- to 15-membered (particularly preferably 5- to 8-membered) cycloalkenyl groups, such as a cyclopentenyl group and a cyclohexenyl group; and bridged cyclic hydrocarbon groups, such as a perhydronaphthalen-1-yl group, a norbornyl group, an adamantyl group, a tricyclo[5.2.1.$0^{2,6}$]decan-8-yl group, and a tetracyclo[4.4.0.$1^{2,5}$.$1^{7,10}$]dodecan-3-yl group.

Examples of the aromatic hydrocarbon group include aryl groups having from 6 to 20 carbons, such as a phenyl group, a naphthyl group, and an anthracenyl group. In addition, another ring (e.g., such as an alicyclic ring) may be fused to the aromatic ring constituting the aromatic hydrocarbon group to form a fused ring. Examples of the group containing such a fused ring include a fluorene group.

The heterocyclic group is a group produced by removing one hydrogen atom from the structural formula of the heterocycle. In addition, the heterocycle includes an aromatic heterocycle and a non-aromatic heterocycle. Examples of such a heterocycle include a 3- to 10-membered (preferably 4- to 6-membered) ring having carbon atoms and at least one heteroatom (e.g., such as an oxygen atom, a sulfur atom, or a nitrogen atom) as atoms constituting the ring, and a fused ring of these. Specific examples include heterocycles containing an oxygen atom as a heteroatom (e.g., 3-membered rings, such as an oxirane ring; 4-membered rings, such as an oxetane ring; 5-membered rings, such as a furan ring, a tetrahydrofuran ring, an oxazole ring, an isoxazole ring, and a γ-butyrolactone ring; 6-membered rings, such as a 4-oxo-4H-pyran ring, a tetrahydropyran ring, and a morpholine ring; fused rings, such as a benzofuran ring, an isobenzofuran ring, a 4-oxo-4H-chromene ring, a chroman ring, and an isochroman ring; and bridged rings, such as a 3-oxatricyclo[4.3.1.1$^{4,8}$]undecan-2-one ring and a 3-oxatricyclo[4.2.1.0$^{4,8}$]nonan-2-one ring), heterocycles containing a sulfur atom as a heteroatom (e.g., 5-membered rings, such as a thiophene ring, a thiazole ring, an isothiazole ring, and a thiadiazole ring; and 6-membered rings, such as a 4-oxo-4H-thiopyran ring; and fused rings, such as a benzothiophene ring), and heterocycles containing a nitrogen atom as a heteroatom (e.g., 5-membered rings, such as a pyrrole ring, a pyrrolidine ring, a pyrazole ring, an imidazole ring, and a triazole ring; 6-membered rings, such as an isocyanuric ring, a pyridine ring, a pyridazine ring, a pyrimidine ring, a pyrazine ring, a piperidine ring, and a piperazine ring; and fused rings, such as an indole ring, an indoline ring, a quinoline ring, an acridine ring, a naphthyridine ring, a quinazoline ring, and a purine ring).

The hydrocarbon groups or heterocyclic groups may have a substituent of various types [e.g., a halogen atom, an oxo group, a hydroxyl group, a substituted oxy group (e.g., an alkoxy group, an aryloxy group, an aralkyloxy group, or an acyloxy group), a carboxyl group, a substituted oxycarbonyl group (e.g., an alkoxycarbonyl group, an aryloxycarbonyl group, or an aralkyloxycarbonyl group), a substituted or unsubstituted carbamoyl group, a cyano group, a nitro group, a substituted or unsubstituted amino group, or a sulfo group].

In [1], the compound represented by Formula (2) (which may be hereinafter referred to as the "imino acid (2)") is reacted with a hydroxyl group in the linear polymer (I) to produce a modified polymer (II).

The imino acid (2) is a compound in which an imino group in an imino acid is protected with a carbamate-based protecting group (COOR$^0$ group) or a compound in which a secondary amino group in a cyclic amino acid is protected with a carbamate-based protecting group.

Examples of the imino acid include proline, 3-pyrrolidinecarboxylic acid, 2-piperidinecarboxylic acid, 4-piperidinecarboxylic acid, and (4-piperidinyl)acetic acid.

The carbamate-based protecting group is preferably a t-butoxycarbonyl group (Boc), a benzyloxycarbonyl group (CBZ), a 9-fluorenylmethyloxycarbonyl group (Fmoc), or the like in that these groups can be deprotected under mild conditions.

Examples of the linear polymer (I) include polysaccharides and poly(vinyl alcohol) described above. One of these can be used individually or two or more in combination.

The weight average molecular weight of the linear polymer (I) is, for example, from 10000 to 1000000 in a case where the linear polymer is a polysaccharide, such as cellulose. In addition, the weight average molecular weight of the linear polymer (I) is, for example, from 1000 to 100000 in a case where the linear polymer is poly(vinyl alcohol).

The linear polymer (I) is preferably cellulose or poly(vinyl alcohol). For the cellulose, for example, a cellulose derived from wood pulp (softwood pulp or hardwood pulp) or cotton linter pulp, or a crystalline cellulose can be suitably used. The pulp may contain a different component, such as hemicellulose. The cellulose is preferably used in a finely ground form, for example, by subjecting the cellulose to a process, such as disintegration.

The reaction of the linear polymer (I) with the imino acid (2) is preferably carried out in the presence of a catalyst. Examples of the catalyst include triethylamine, pyridine, and N,N-dimethyl-4 aminopyridine (DMAP). One of these can be used individually or two or more in combination.

The amount of the catalyst is, for example, from 0.01 to 1.0 mol per mole of the imino acid (2).

In addition, the reaction is preferably carried out in the presence of a condensing agent. Examples of the condensing agent include 1-(3-dimethylaminopropyl)-3-ethylcarbodiimide hydrochloride (EDC-HCl), N,N'-dicyclohexylcarbodiimide, and N,N'-diisopropylcarbodiimide. One of these can be used individually or two or more in combination.

The amount of the condensing agent is, for example, from 1 to 10 mol per mole of the imino acid (2).

The reaction is preferably carried out in the presence of a solvent. Examples of the solvent include aliphatic hydrocarbons, such as hexane, heptane, and octane; alicyclic hydrocarbons, such as cyclohexane; aromatic hydrocarbons, such as benzene, toluene, xylene, and ethylbenzene; halogenated hydrocarbons, such as chloroform, dichloromethane, and 1,2-dichloroethane; ethers, such as diethyl ether, dimethoxyethane, tetrahydrofuran, and dioxane; ketones, such as acetone, methyl ethyl ketone, and methyl isobutyl ketone; esters, such as methyl acetate, ethyl acetate, isopropyl acetate, and butyl acetate; amides, such as N,N-dimethylformamide, N,N-dimethylacetamide, and N-methylpyrrolidone; nitriles, such as acetonitrile, propionitrile, and benzonitrile; alcohols, such as methanol, ethanol, isopropyl alcohol, and butanol; and dimethyl sulfoxide. One of these can be used individually or two or more in combination. The solvent is preferably appropriately selected and used according to the type of linear polymer (I).

In a case where the linear polymer (I) is cellulose, the solvent is preferably an amide, such as N,N-dimethylacetamide in terms of excellent solubility for cellulose, and particularly preferably a mixture prepared by mixing a lithium salt, such as lithium chloride, with the amide. The lithium salt concentration in the amide is, for example, from 1 to 30 wt.%.

The amount of the solvent is, for example, from 10 to 500 mL and preferably from 20 to 100 mL per gram of cellulose. The solvent used in an amount beyond the above range would reduce concentrations of the reaction components and tend to reduce the reaction rate. On the other hand, the solvent used in an amount below the above range would increase the viscosity and thus tend to make it difficult to stir.

In addition, in a case where the linear polymer (I) is poly(vinyl alcohol), [1] is preferably performed in two stages,

and in the stage of starting the reaction with the compound represented by Formula (2), dimethyl sulfoxide is preferably used as the solvent in terms of excellent solubility of poly(vinyl alcohol), which has a high degree of saponification. On the other hand, the modified polymer (II), which is the product, is poorly soluble in dimethyl sulfoxide. Thus, it is preferable to temporarily purify the produced modified polymer (II) by filtration or the like at the stage when the reaction has proceeded to some extent, change the solvent to a halogenated hydrocarbon, such as dichloromethane, and further continue the reaction of the poly(vinyl alcohol) with the compound represented by Formula (2).

The amount of dimethyl sulfoxide is, for example, from 50 to 500 mL and preferably from 80 to 150 mL per gram of poly(vinyl alcohol). In addition, the amount of the halogenated hydrocarbon is, for example, from 50 to 500 mL and preferably from 80 to 150 mL per gram of poly(vinyl alcohol). The solvent used in an amount beyond the above range would reduce concentrations of the reaction components and tend to reduce the reaction rate.

In [2], the imino group in the modified polymer (II) produced through [1] is deprotected (more specifically, the protecting group of the imino group in the group represented by Formula (b) introduced into the modified polymer (II) is removed). Through [2], the modified polymer (III) is produced.

The method for removing the protecting group in the imino group of the modified polymer (II) can be appropriately selected according to the type of protecting group.

For example, for the imino group having Boc or the like as the protecting group, the protecting group can be removed by reaction with a strong acid, such as hydrochloric acid or trifluoroacetic acid. In addition, in the modified polymer (III) produced by deprotection using a strong acid, the group represented by Formula (c) may form a salt with a counter anion. For example, in a case of reaction with trifluoroacetic acid as a strong acid, the terminal imino group of the group represented by Formula (c) may form a salt with $CF_3COO^-$ and become "$>N^+H_2 \cdot CF_3COO^-$".

For example, for the imino group having CBZ as the protecting group, the protecting group can be removed by reduction reaction in the presence of a catalyst (e.g., Pd-C).

For example, for the imino group having Fmoc as the protecting group, the protecting group can be removed by reaction with a secondary amine, such as pyridine.

The reaction temperature in [2] is, for example, from 0 to 100°C. The reaction time is, for example, from 1 to 24 hours. After completion of the reaction, the resulting reaction product can be separated and purified by a separation means, such as filtration, concentration, distillation, extraction, crystallization, adsorption, recrystallization, or column chromatography; or a separation means in combination of these.

In [3], the modified polymer (II) produced through [2] is reacted with a base and further with a crosslinker, in the presence of a sulfur compound. In a case where the crosslinker is a compound with poor reactivity with a base, the crosslinker may have already been added to the reaction system when the modified polymer (III) is reacted with the base.

The base is a base that produces a counter cation, and examples thereof include quaternary ammonium salts; alkali metal alkoxides, such as lithium methoxide, lithium t-butoxide, sodium methoxide, sodium t-butoxide, potassium methoxide, and potassium t-butoxide; and alkali metal hydroxides, such as lithium hydroxide, sodium hydroxide, and potassium hydroxide.

Examples of the quaternary ammonium salt include salts of a quaternary ammonium cation represented by Formula (q1) and a counter anion.

Examples of the counter anion include $OH^-$, $Cl^-$, $Br^-$, $I^-$, $F^-$, $SO_4^{2-}$, $BH_4^-$, $BF_4^-$, and $PF_6^-$.

Examples of the quaternary ammonium salt include tetramethylammonium hydroxide and tetraethylammonium hydroxide.

The amount of the base is, for example, 50 parts by weight or more per 100 parts by weight of the modified polymer (III).

Examples of the sulfur compound include carbon disulfide. The amount of the sulfur compound is, for example, 20 parts by weight or more per 100 parts by weight of the modified polymer (III).

For the crosslinker, the organic crosslinker or inorganic crosslinker described above can be used. The amount of the crosslinker is, for example, from 0.5 to 15 mol% relative to the modified polymer (III). The upper limit of the amount of the crosslinker is preferably 10 mol%, particularly preferably 8 mol%, most preferably 7 mol%, and especially preferably 6 mol% in terms of improving the metal-adsorbing effect. The lower limit of the amount of the crosslinker is preferably 1 mol% and particularly preferably 2 mol% in terms of reducing the solubility of the crosslinked structure in water to impart insolubility to the crosslinked structure and facilitate solid-phase extraction.

The crosslinker used in an amount beyond the above range would reduce the number of free pendant groups (i.e., pendant groups represented by Formula (a) and not forming a crosslinked structure) of the modified polymer (III) and tend to reduce the metal-adsorbing effect. On the other hand, the crosslinker used in an amount below the above range would increase the water solubility of the crosslinked structure and tend to make it difficult to recover metal by solid-phase extraction.

The reaction in [3] is preferably carried out in the presence of a solvent. Examples of the solvent include aromatic hydrocarbons, such as toluene, xylene, and ethyl benzene; alcohols, such as methanol, ethanol, 2-propanol, isopropyl alcohol, and butanol; N-methyl pyrrolidone, dimethyl sulfoxide, and N,N-dimethylformamide. One of these can be used

individually or two or more in combination. The amount of the solvent is, for example, from 0.5 to 30 times by weight the total amount of the reaction substrates.

The reaction temperature in [3] is, for example, from 0 to 100°C. The reaction time is, for example, from 1 to 24 hours. After completion of the reaction, the resulting reaction product can be separated and purified by a separation means, such as filtration, concentration, distillation, extraction, crystallization, adsorption, recrystallization, or column chromatography; or a separation means in combination of these.

Among the crosslinked structures, a cellulose-based crosslinked structure having repeating units represented by Formulas (IV-1) and (IV-2) produced using polyethylene glycol diglycidyl ether as a crosslinker can be produced, for example, by the following production method. In the formulas below, $R^0$, $R^1$, ring Z, and Q are the same as described above.

[Chem. 15]

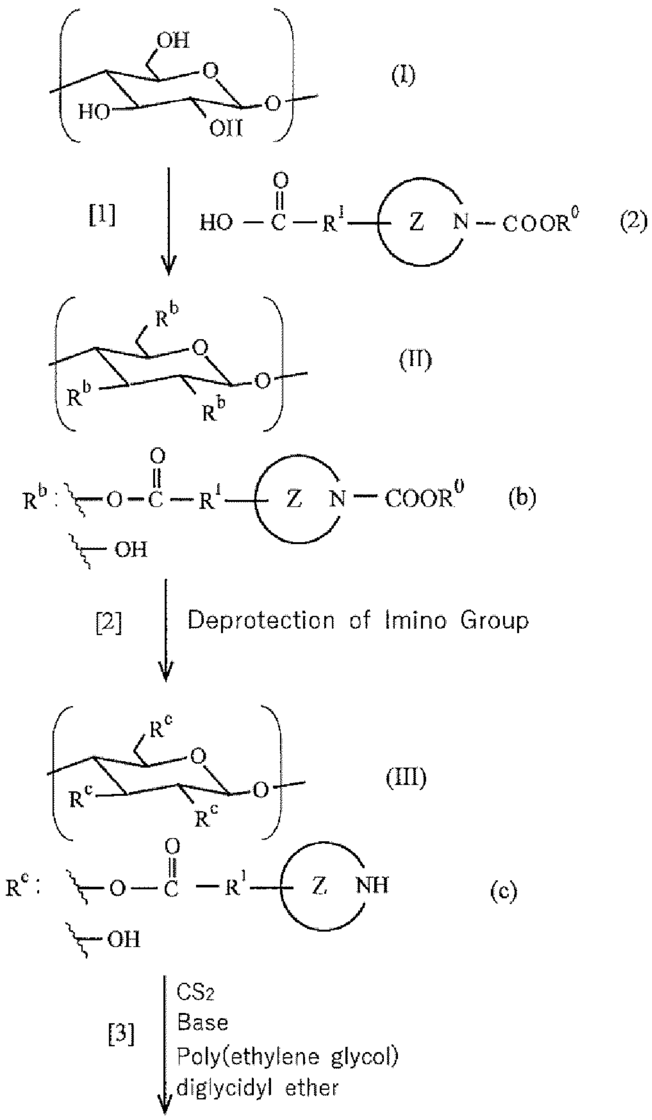

[Chem. 16]

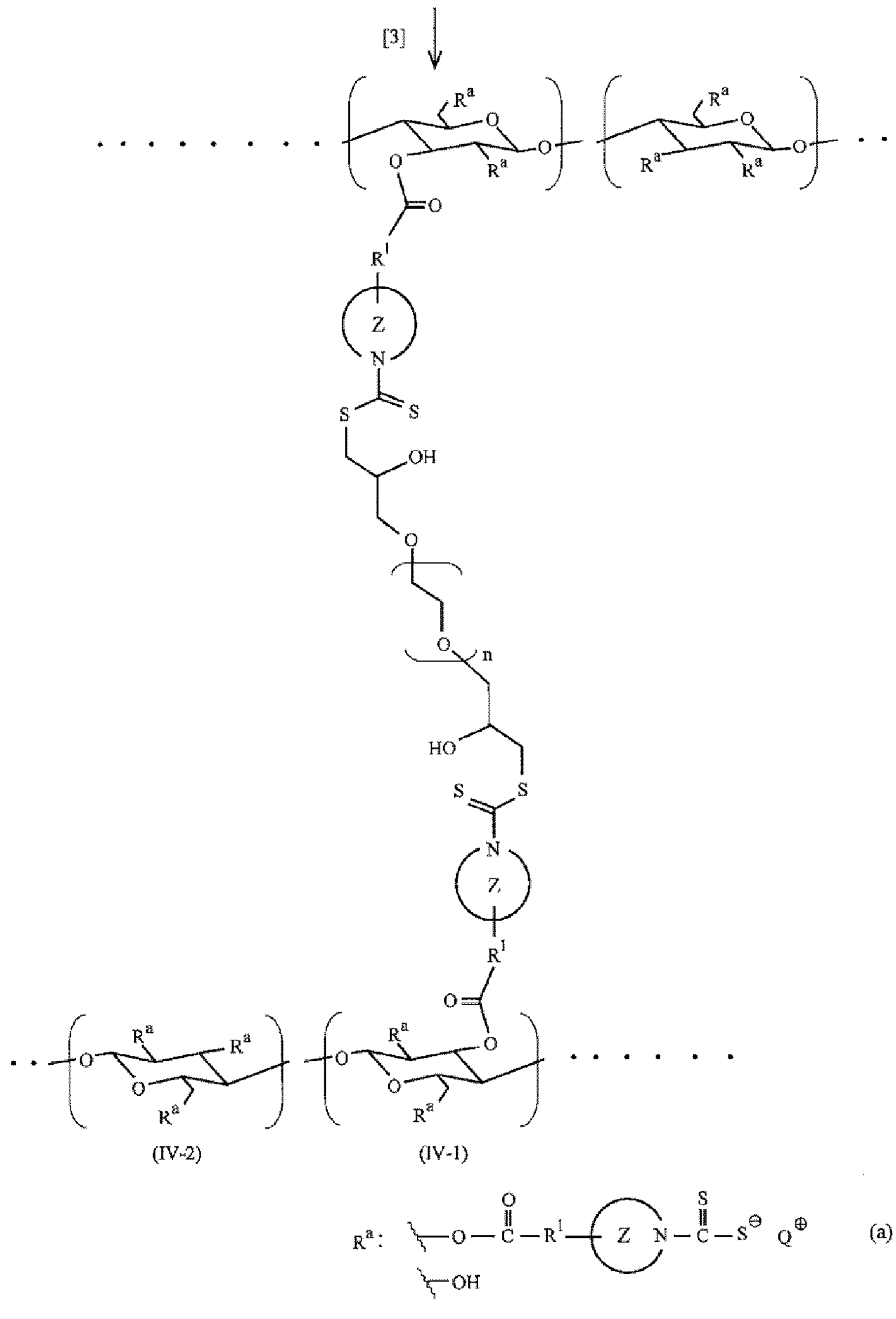

(IV-2) (IV-1)

(a)

$R^b$s in Formula (II) are the same or different and are a hydroxyl group or a group represented by Formula (b). Among all $R^b$s contained in the modified polymer having a repeating unit represented by Formula (II), at least one is a group represented by Formula (b).

$R^c$s in Formula (III) are the same or different and are a hydroxyl group or a group represented by Formula (c). Among all $R^c$s contained in the modified polymer having a repeating unit represented by Formula (III), at least one is a group represented by Formula (c) above. In addition, the group represented by Formula (c) may form a salt.

$R^a$s in Formulas (IV-1) and (IV-2) are the same or different and are a hydroxyl group or the pendant group represented by Formula (a). Among all $R^a$s contained in the crosslinked structure having the repeating units represented by Formulas (IV-1) and (IV-2), at least one is the pendant group represented by Formula (a). In addition, in Formulas (IV-1) and (IV-2), n is the number of repetitions of an ethylene oxide group shown in parentheses and is, for example, from 1 to 30, preferably from 1 to 20, and particularly preferably from 1 to 15.

Among the crosslinked structures, a poly(vinyl alcohol)-based crosslinked structure having repeating units

represented by Formulas (IV'-1) and (IV'-2) produced using polyethylene glycol diglycidyl ether as a crosslinker can be manufactured, for example, by the following manufacturing method. In the formulas below, $R^0$, $R^1$, ring Z, Q, and n are the same as described above.

[Chem. 17]

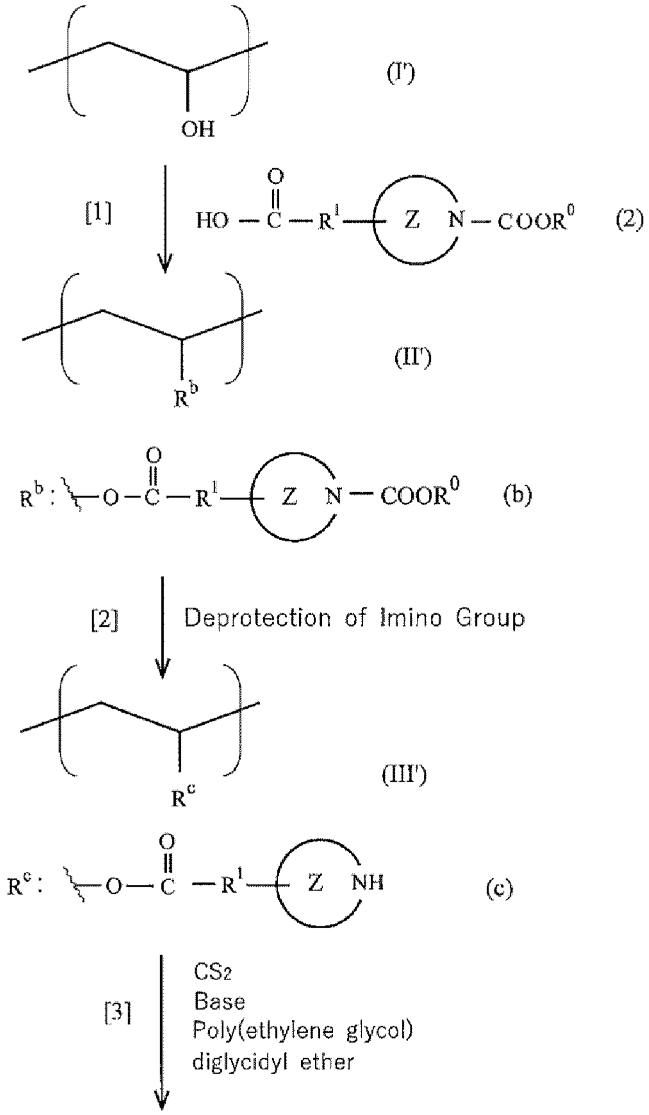


[Chem. 18]

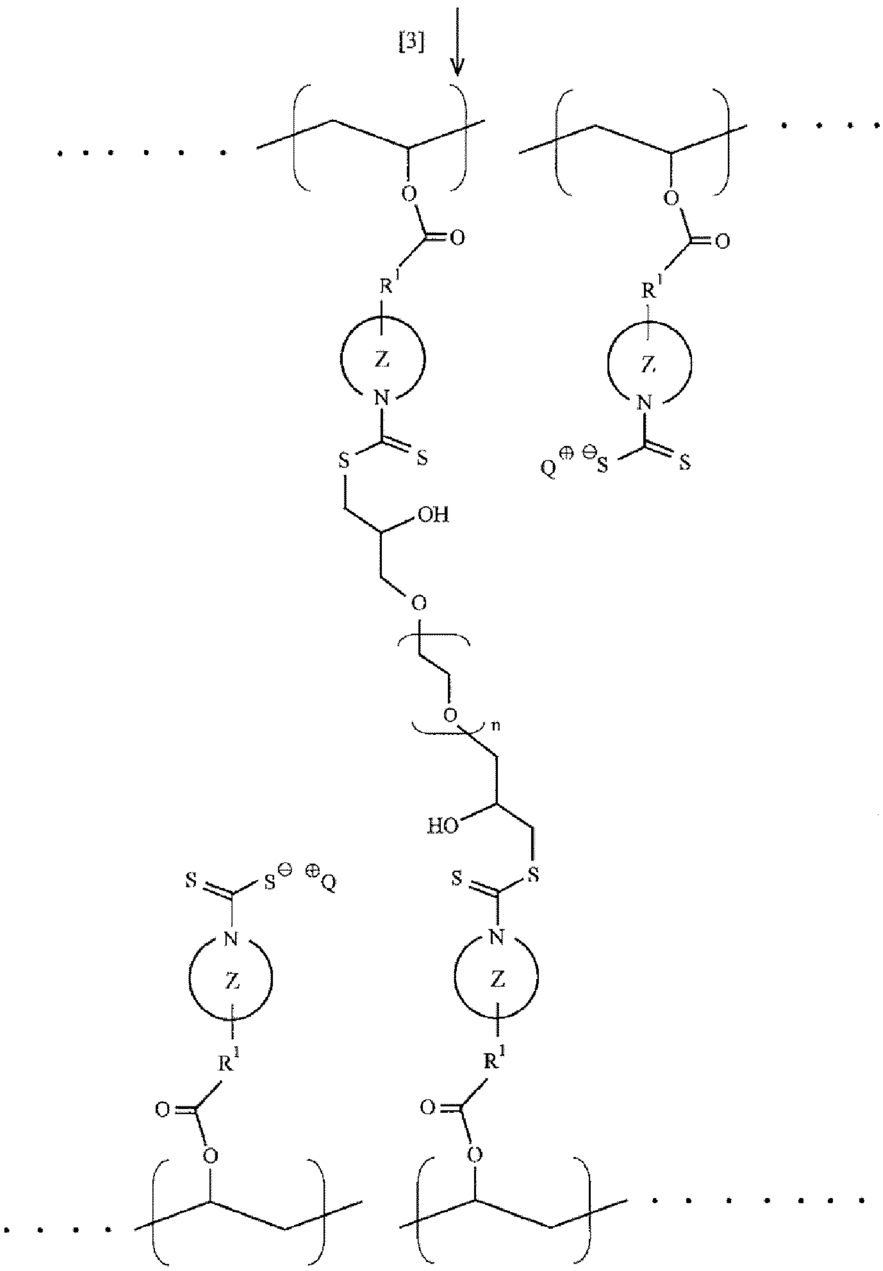


(IV'-2) (IV'-1)

The poly(vinyl alcohol) (I') to be used in [1] is preferably a poly(vinyl alcohol) with a degree of saponification of 50% or greater (more preferably 80% or greater and particularly preferably 95% or greater) in terms of being able to introduce many pendant groups represented by Formula (a) and being able to improve the metal-adsorbing effect. The upper limit of the degree of saponification is, for example, 99%.

Metal-Trapping Material

A metal-trapping material of the present disclosure includes the crosslinked structure.

The metal-trapping material may contain another component in addition to the crosslinked structure, but the proportion of the crosslinked structure accounts, for example, for 60 wt.% or greater of the total amount of the metal-trapping material, preferably 70 wt.% or greater, particularly preferably 80 wt.% or greater, most preferably 90 wt.% or greater, and especially preferably 95 wt.% or greater. With the proportion of the crosslinked structure accounting for less than the above range, the metal-trapping material would tend to have difficulty in efficiently and selectively adsorbing a valuable metal and/or a toxic metal ion.

The form of the metal-trapping material is not particularly limited as long as the effect is achieved, and examples include a powder form, a pellet form, a thread form, and a nonwoven fabric form.

The metal-trapping material has the characteristics of the crosslinked structure. That is, the metal-trapping material has a high adsorption capability for a soft acid or an intermediate acid in the HSAB theory and has a low adsorption capability for a hard acid in the HSAB theory. Thus, the metal-trapping material is suitable for the purpose of selective recovery of a metal classified as a soft acid or an intermediate acid in the HSAB theory (e.g., a valuable metal ion and/or a toxic metal ion) from an industrial effluent, a mine effluent, hot spring water, or the like containing a metal classified as a soft acid or an intermediate acid in the HSAB theory mixed with a metal classified as a hard acid (e.g., such as an alkali metal ion and/or an alkaline earth metal ion).

Thus, the metal-trapping material is particularly useful as a trapping material for a metal whose cation is classified as a soft acid or an intermediate acid in the HSAB theory (e.g., a valuable metal and/or a toxic metal, preferably at least one metal selected from titanium, vanadium, manganese, iron, cobalt, nickel, copper, zinc, gallium, arsenic, selenium, cadmium, indium, lead, bismuth, ruthenium, rhodium, iridium, palladium, platinum, silver, and gold).

## Method for Recovering Metal

A method for recovering a metal of the present disclosure is a method in which a metal dissolved in an aqueous solution is adsorbed on the metal-trapping material and recovered.

The metal is present as a metal ion in an aqueous solution. In addition, the metal-trapping material adsorbs and recovers a metal ion by forming a chelate complex by the pendant group represented by Formula (a) with a metal ion (particularly, a metal ion classified as a soft acid or an intermediate acid in the HSAB theory) contained in an aqueous solution.

Examples of the metal ion include an ion of at least one metal selected from titanium, vanadium, manganese, iron, cobalt, nickel, copper, zinc, gallium, arsenic, selenium, cadmium, indium, lead, bismuth, ruthenium, rhodium, iridium, palladium, platinum, silver, and gold.

The method in which a metal dissolved in an aqueous solution is adsorbed on the crosslinked structure is not particularly limited, and examples include a method of filling the crosslinked structure into a column or the like, and flowing an aqueous solution containing a dissolved metal through the column, and a method of adding the crosslinked structure to an aqueous solution containing a dissolved metal and stirring the mixture.

In the method for recovering a metal, the pH of the metal-trapping material (or the crosslinked structure) is preferably adjusted, for example, to 1 to 9 (preferably to 1 to 7, particularly preferably to 2 to 6, and most preferably to 2 to 4) in terms of being able to further improve the adsorption capability for a metal and being able to more efficiently recover a metal. The pH of the metal-trapping material (or the crosslinked structure) can be adjusted using a well-known and commonly used pH adjuster (an acid, such as nitric acid, or an alkali, such as sodium hydroxide).

In addition, after a metal ion is adsorbed on the crosslinked structure, the crosslinked structure that has adsorbed the metal ion is combusted, and this can easily recover the metal.

Each of the configurations, their combinations, and the like of the present disclosure above is an example, and addition, omission, substitution, and change of the configuration can be appropriately made without departing from the gist of the present disclosure.

## Examples

Hereinafter, the present disclosure will be described more specifically by examples, but the present disclosure is not limited by these examples and is limited only by the claims.

### Example 1: Synthesis of Crosslinked Structure (DMC-Pro-Epo3)

Cellulose (I) (cellulose having a repeating unit represented by Formula (I) below, 0.501 g, 3.08 mmol) was placed in a two-necked eggplant-shaped flask and dried in vacuo at 90°C for 2 hours. In a nitrogen atmosphere, N,N-dimethylacetamide (15 mL) was added, and the mixture was stirred for 21 hours. The reaction vessel was cooled to 0°C in an ice-bath, and lithium chloride (0.99 g) was added. The mixture was stirred while the temperature was raised to room temperature (25°C), and cellulose was dissolved. To this reaction vessel, DMAP (2.26 g, 18.5 mmol), N-Boc-L-proline (3.98 g, 18.5 mmol), EDC·HCl (3.55 g, 18.5 mmol), and N,N-dimethylacetamide (15 mL) were added, and then the mixture was stirred at room temperature for 24 hours. The reaction solution was poured into water to reprecipitate a solid, and the precipitated solid was collected by suction filtration. The collected solid was dissolved in ethanol, reprecipitated with water, and collected by suction filtration. The solid was dried in vacuo, and a modified cellulose (DMC-Pro-II) (a polymer having a repeating unit represented by Formula (DMC-Pro-II), 1.81 g, yield 78%) was produced as a white solid.

From the results of $^1$H-NMR measurement, the total average degree of substitution of N-Boc-proline was calculated to be 3.0.

[Chem. 19]

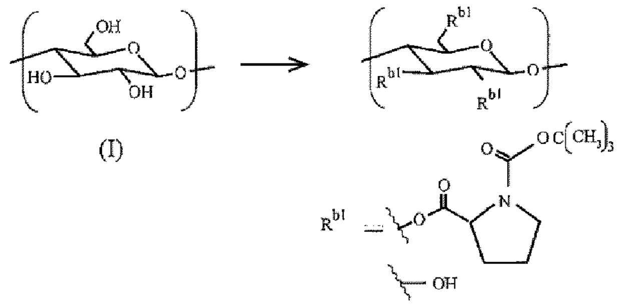

(I)

DMC-Pro-II

(DMC-Pro-II)

$^1$H-NMR (500 MHz, $CDCl_3$, 55°C): δ4.00-5.30 (br, 8H), 2.95-4.00 (br, 8H), 1.60-2.56 (br, 12H), 1.43 (br, 27H)

In a nitrogen atmosphere, trifluoroacetic acid (6.6 mL) and the modified cellulose (DMC-Pro-II) (1.00 g, 1.33 mmol) were added to a two-necked eggplant-shaped flask and stirred at room temperature for 7.5 hours. A solid precipitated by reprecipitation using diethyl ether was collected by centrifugation and washed with diethyl ether. The washed solid was then dried in vacuo, and a salt of modified cellulose (DMC-Pro-III) (a polymer having a repeating unit represented by Formula (DMC-Pro-III)) was produced as a white solid (0.979 g, yield 92%). The results of $^1$H-NMR measurement of DMC-Pro-III are shown below.

[Chem. 20]

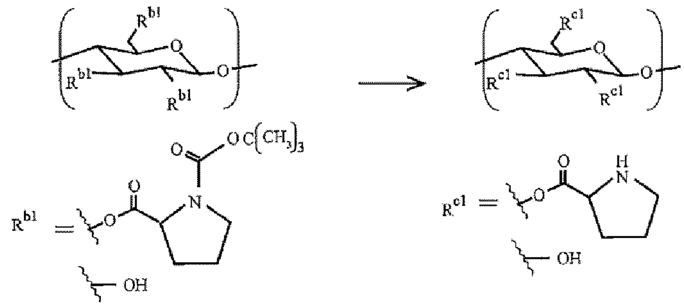

DMC-Pro-II DMC-Pro-III

(DMC-Pro-III)

$^1$H-NMR (500 MHz, $D_2O$, r.t.): δ 5.24 (br, 1H), 4.91 (br, 1H), 4.80 (br, overlapped with HDO), 4.45 (br, 3H), 4.21 (br, 1H), 4.06 (br, 1H), 3.81 (br, 1H), 3.67 (br, 1H), 3.32 (br, 6H), 2.18-2.54 (br, 3H), 1.60-2.16 (br, 9H)

In a nitrogen atmosphere, the salt (500 mg, 0.628 mmol) of the modified cellulose (DMC-Pro-III) was dissolved in dimethyl sulfoxide (3.1 mL) in a two-necked eggplant-shaped flask, and carbon disulfide (0.57 mL, 9.4 mmol) was added. The mixture was cooled to about 10°C under light-shielding, a 10% tetramethylammonium hydroxide methanol solution (3.77 mL, 3.77 mmol) was added dropwise, and the mixture was stirred for 7 hours while the temperature was raised to 25°C. To the mixture, 0.60 mL of a dimethyl sulfoxide solution of polyethylene glycol diglycidyl ether (15.7 mg/mL) as a crosslinker was added (the crosslinker: about 19 μmol, used in an amount of about 3 mol% of DMC-Pro-III), and the mixture was stirred for 4 hours. Ethanol was added to reprecipitate a solid, and the precipitated solid was collected by centrifugation and washed with ethanol. The washed solid was then dried in vacuo, and a crosslinked structure (DMC-Pro-Epo3) (a crosslinked structure having repeating units represented by Formulas (IV-1-1) and (IV-2-1), the molar ratio of free pendant groups to pendant groups forming the crosslinked structure was 100:from 0.5 to 1) was produced as a white solid (426 mg, yield 74%). The IR spectrum of DMC-Pro-Epo3 is shown in FIG. 1.

[Chem. 21]

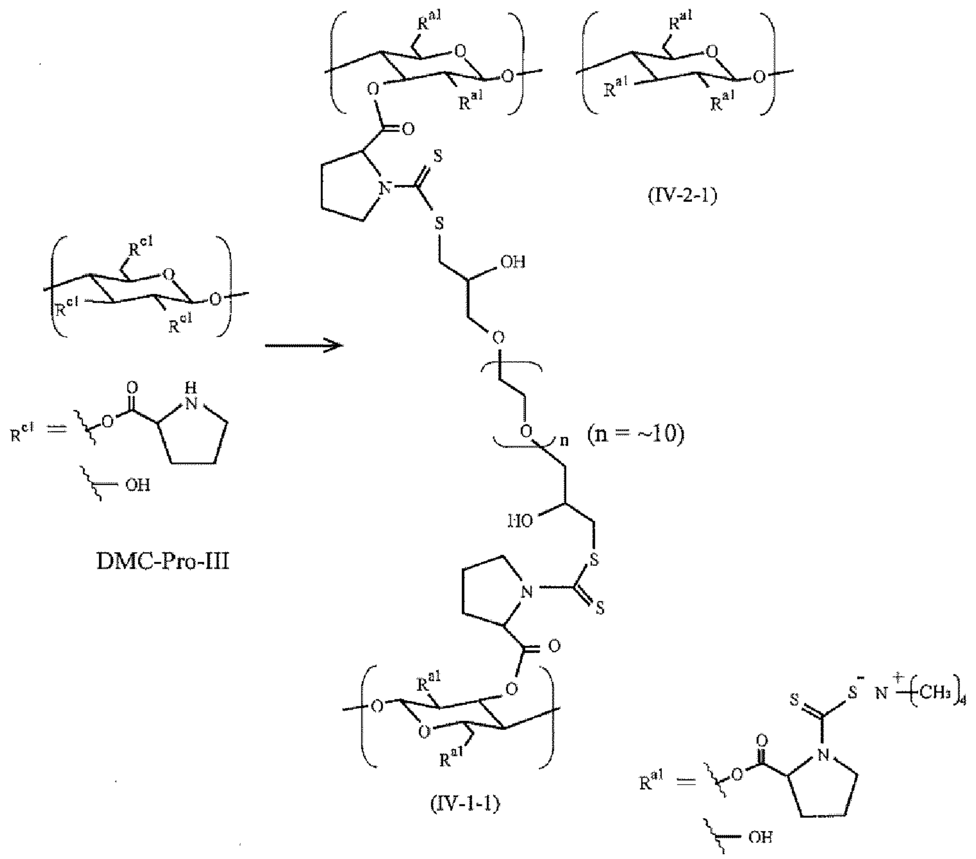

(IV-2-1)

DMC-Pro-III

(IV-1-1)

DMC-Pro-Epo3

Example 2: Synthesis of Crosslinked Structure (DMC-Pro-Epo6)

A crosslinked structure (DMC-Pro-Epo6, the molar ratio of free pendant groups to pendant groups forming the crosslinked structure was 100:from 1 to 2) was produced as a white solid (449 mg, yield 76%) in the same manner as in Example 1 except that the amount of the dimethyl sulfoxide solution of polyethylene glycol diglycidyl ether (15.7 mg/mL) as a crosslinker was increased from 0.60 mL to 1.2 mL (the crosslinker: about 38 μmol, used in an amount of about 6 mol% of DMC-Pro-III). The IR spectrum of DMC-Pro-Epo6 is shown in FIG. 1.

Example 3: Synthesis of Crosslinked Structure (DMC-Pro-Epo9)

A crosslinked structure (DMC-Pro-Epo9, the molar ratio of free pendant groups to pendant groups forming the crosslinked structure was 100:from 1.5 to 3) was produced as a white solid (474 mg, yield 78%) in the same manner as in Example 1 except that the amount of the dimethyl sulfoxide solution of polyethylene glycol diglycidyl ether (15.7 mg/mL) as a crosslinker was increased from 0.60 mL to 1.8 mL (the crosslinker: about 56 μmol, used in an amount of about 9 mol% of DMC-Pro-III). The IR spectrum of DMC-Pro-Epo9 is shown in FIG. 1.

Comparative Example 1: Synthesis of Modified Cellulose (DMC-Pro)

A modified cellulose (DMC-Pro) (a polymer having a repeating unit represented by Formula (IV-2-2), the molar ratio of free pendant groups to pendant groups forming a crosslinked structure was 100:0) was produced as a white solid (453 mg, yield 80%) in the same manner as in Example 1 except that the dimethyl sulfoxide solution of polyethylene glycol diglycidyl ether (15.7 mg/mL) as a crosslinker was not used. The IR spectrum of DMC-Pro is shown in FIGS. 1 and 3.

[Chem. 22]

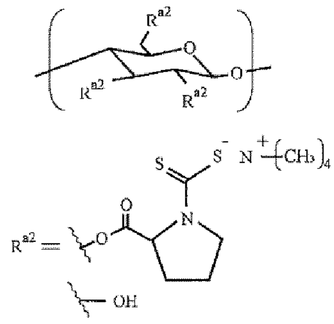

(IV-2-2)

DMC-Pro

(DMC-Pro)
$^1$H-NMR (500 MHz, $D_2O$, r.t.): $\delta$ 4.40-5.70 (br, overlapped with HDO), 3.35-4.40 (br), 3.15 (br, $CH_3$), 1.20-2.85 (br)

Example 4: Synthesis of Crosslinked Structure (DMC-ProNa-Epo3)

A salt (500 mg, 0.628 mmol) of the modified cellulose (DMC-Pro-III) produced in the same manner as in Example 1 was placed in a two-necked eggplant-shaped flask in a nitrogen atmosphere, and dimethyl sulfoxide (6.3 mL) was added to this to dissolve the modified cellulose. The mixture was cooled to about 10°C, and carbon disulfide (0.57 mL, 9.4 mmol) was added. Sodium t-butoxide (362 mg, 3.77 mmol) was added in three portions, and the mixture was stirred for 7 hours while the temperature was raised to 25°C. To the mixture, 0.60 mL of a dimethyl sulfoxide solution of polyethylene glycol diglycidyl ether (15.7 mg/mL) as a crosslinker was added (the crosslinker: about 19 $\mu$mol, used in an amount of about 3.0 mol% of DMC-Pro-III), and the mixture was stirred for 4 hours. Ethanol was added to reprecipitate a solid, and the precipitated solid was collected by centrifugation and washed with ethanol. The washed solid was then dried in vacuo, and a crosslinked structure (DMC-ProNa-Epo3) (a crosslinked structure having repeating units represented by Formulas (IV-1-2) and (IV-2-3), the molar ratio of free pendant groups to pendant groups forming the crosslinked structure was 100:from 0.5 to 1) was produced as a white solid (178 mg, yield 38%). The IR spectrum of DMC-ProNa-Epo3 is shown in FIG. 2.

[Chem. 23]

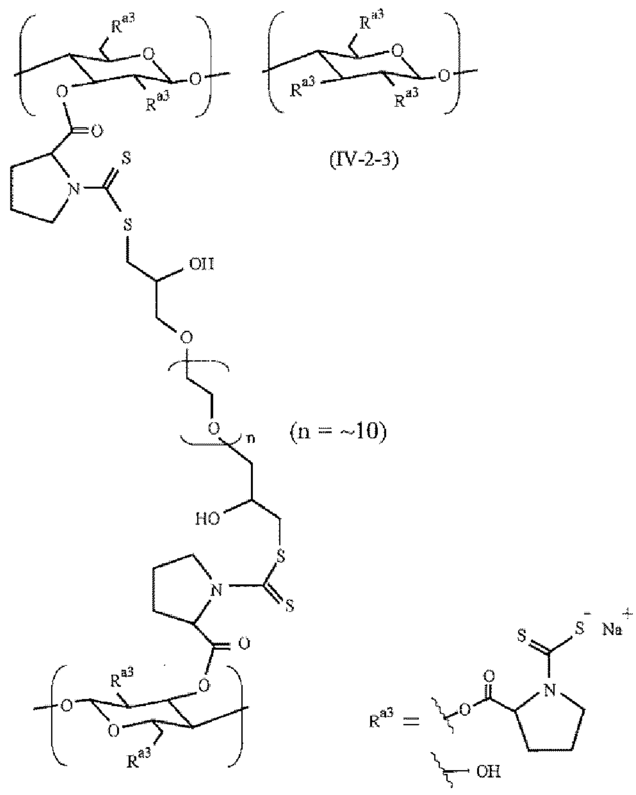

(IV-2-3)

(IV-1-2)

DMC-ProNa-Epo3

Example 5: Synthesis of Crosslinked Structure (DMC-ProNa-Epo6)

A crosslinked structure (DMC-ProNa-Epo6, the molar ratio of free pendant groups to pendant groups forming the crosslinked structure was 100:from 1 to 2) was produced as a pale-yellow solid (200 mg, yield 42%) in the same manner as in Example 4 except that the amount of the dimethyl sulfoxide solution of polyethylene glycol diglycidyl ether (15.7 mg/mL) as a crosslinker was increased from 0.6 mL to 1.2 mL (the crosslinker: about 38 μmol, used in an amount of about 6 mol% of DMC-Pro-III). The IR spectrum of DMC-ProNa-Epo6 is shown in FIG. 2.

Example 6: Synthesis of Crosslinked Structure (DMC-ProNa-Epo9)

A crosslinked structure (DMC-ProNa-Epo9, the molar ratio of free pendant groups to pendant groups forming the crosslinked structure was 100:from 1.5 to 3) was produced as a pale-yellow solid (245 mg, yield 52%) in the same manner as in Example 4 except that the amount of the dimethyl sulfoxide solution of polyethylene glycol diglycidyl ether (15.7 mg/mL) as a crosslinker was increased from 0.6 mL to 1.8 mL (the crosslinker: about 56 μmol, used in an amount of about 9 mol% of DMC-Pro-III). The IR spectrum of DMC-ProNa-Epo9 is shown in FIG. 2.

Comparative Example 2: Synthesis of Modified Cellulose (DMC-PoNa)

A salt (2.00 g, 2.51 mmol) of the modified cellulose (DMC-Pro-III) produced in the same manner as in Example 1 was placed in a two-necked eggplant-shaped flask and dissolved in dimethyl sulfoxide (25.0 mL) in a nitrogen atmosphere. The mixture was cooled to about 10°C, and carbon disulfide (2.3 mL, 38 mmol) was added. Sodium t-butoxide (1.45 g, 15.1 mmol) was added in three portions, and the mixture was stirred for 4 hours while the temperature was raised to room temperature. 2-Propanol was added to reprecipitate a solid, and the precipitated solid was collected by centrifugation and washed with 2-propanol. The washed solid was then dried in vacuo, and a modified cellulose (DMC-ProNa) (a polymer having a repeating unit represented by Formula (IV-2-4), the molar ratio of free pendant groups to pendant groups forming a crosslinked structure was 100:0) was produced as a pale-yellow solid (1.68 g, yield 89%).

The IR spectrum of DMC-ProNa is shown in FIG. 2.

[Chem. 24]

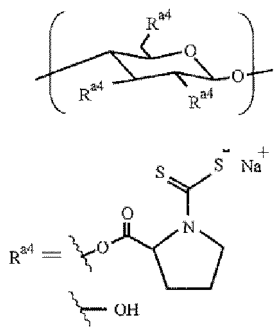

(IV-2-4)

DMC-ProNa

(DMC-ProNa)
$^{1}$H-NMR (500 MHz, $D_2O$, r.t.): δ 4.40-5.70 (br, overlapped with HDO), 3.35-4.40 (br), 1.40-2.80 (br)

Example 7: Synthesis of Crosslinked Structure (DMC-Pro-Fe3)

A salt (500 mg, 0.628 mmol) of the modified cellulose (DMC-Pro-III) produced in the same manner as in Example 1 was placed in a two-necked eggplant-shaped flask and dissolved in dimethyl sulfoxide (6.0 mL) in a nitrogen atmosphere. The mixture was cooled to about 10°C, and 0.30 mL of a dimethyl sulfoxide solution of anhydrous iron(III) chloride (10 mg/mL) as a crosslinker (the crosslinker: 18 μmol, used in an amount of about 3 mol% of DMC-Pro-III) and carbon disulfide (0.57 mL, 9.4 mmol) were added. A 10% tetramethylammonium hydroxide methanol solution (3.77 mL, 3.77 mmol) was added dropwise, and the mixture was stirred for 7 hours while the temperature was raised to 25°C. Ethanol was added to reprecipitate a solid, and the precipitated solid was collected by centrifugation and washed with ethanol. The washed solid was then dried in vacuo, and a crosslinked structure (DMC-Pro-Fe3) (a crosslinked structure having repeating units represented by Formulas (IV-1-3), (IV-1-4), and (IV-2-5), the molar ratio of free pendant groups to pendant groups forming the crosslinked structure was 100:from 1.5 to 3) was produced as a gray solid (309 mg, yield 55%). The IR spectrum of DMC-Pro-Fe3 is shown in FIG. 3.

[Chem. 25]

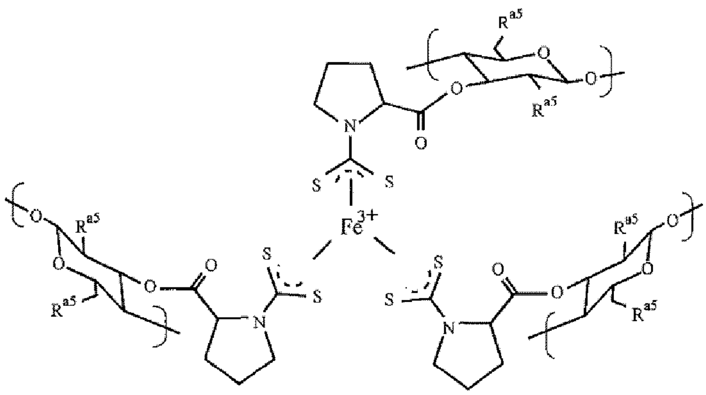

(IV-1-3)

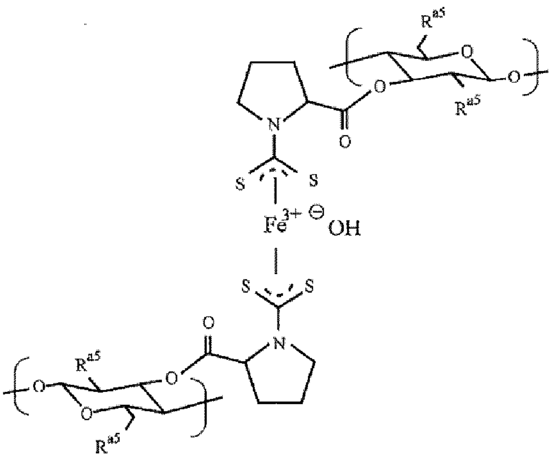

(IV-1-4)

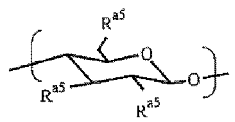

(IV-2-5)

DMC-Pro-Fe3

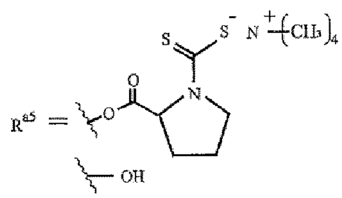

Example 8: Synthesis of Crosslinked Structure (DMC-Pro-Fe6)

A crosslinked structure (DMC-Pro-Fe6, the molar ratio of free pendant groups to pendant groups forming the crosslinked structure was 100:from 3 to 6) was produced as a gray solid (324 mg, yield 57%) in the same manner as in Example 7 except that 5.6 mL of dimethyl sulfoxide was used to dissolve the modified cellulose (DMC-Pro-III), and 0.60 mL of the dimethyl sulfoxide solution of anhydrous iron(III) chloride (10 mg/mL) as a crosslinker was used (the crosslinker: 37 μmol, used in an amount of about 6 mol% of DMC-Pro-III). The IR spectrum of DMC-Pro-Fe6 is shown in FIG. 3.

Example 9: Synthesis of Crosslinked Structure (DMC-Pro-Fe10)

A crosslinked structure (DMC-Pro-Fe10, the molar ratio of free pendant groups to pendant groups forming the crosslinked structure was 100:from 5 to 10) was produced as a gray solid (295 mg, yield 52%) in the same manner as in Example 7 except that 5.3 mL of dimethyl sulfoxide was used to dissolve the modified cellulose (DMC-Pro-III), and 1.0 mL of the dimethyl sulfoxide solution of anhydrous iron(III) chloride (10 mg/mL) as a crosslinker was used (the crosslinker: 62 μmol, used in an amount of about 10 mol% of DMC-Pro-III). The IR spectrum of DMC-Pro-Fe10 is shown in FIG. 3.

Example 10: Synthesis of Crosslinked Structure (DMC-ProNa-Fe3)

A salt (500 mg, 0.628 mmol) of the modified cellulose (DMC-Pro-III) produced in the same manner as in Example 1 was placed in a two-necked eggplant-shaped flask and dissolved in dimethyl sulfoxide (12.0 mL) in a nitrogen atmosphere. The mixture was cooled to about 10°C, and 0.30 mL of a DMSO solution of anhydrous iron(III) chloride (10 mg/mL) as a crosslinker (the crosslinker: 18 $\mu$mol, used in an amount of about 3 mol% of DMC-Pro-III) and carbon disulfide (0.57 mL, 9.4 mmol) were added. Sodium t-butoxide (362 mg, 3.77 mmol) was added in three portions, and the mixture was stirred for 4 hours while the temperature was raised to 25°C. 2-Propanol was added to reprecipitate a solid, and the precipitated solid was collected by centrifugation and washed with 2-propanol. The washed solid was then dried in vacuo, and a crosslinked structure (DMC-ProNa-Fe3) (a crosslinked structure having repeating units represented by Formulas (IV-1-5), (IV-1-6), and (IV-2-6), the molar ratio of free pendant groups to pendant groups forming the crosslinked structure was 100:from 1.5 to 3) was produced as a gray solid (412 mg, yield 87%). The IR spectrum of DMC-ProNa-Fe3 is shown in FIG. 4.

[Chem. 26]

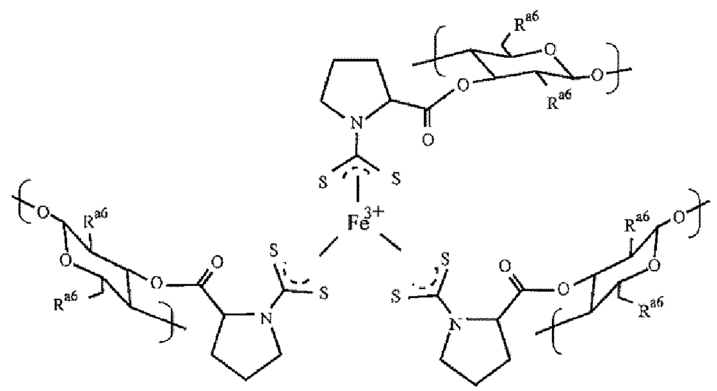

(IV-1-5)

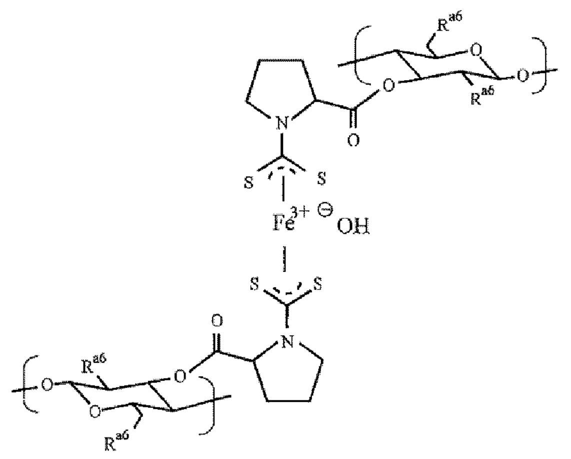

(IV-1-6)

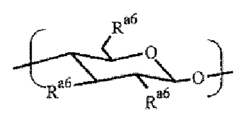

(IV-2-6)

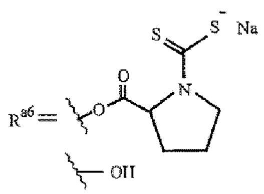

DMC-ProNa-Fe3

Example 11: Synthesis of Crosslinked Structure (DMC-ProNa-Fe6)

A crosslinked structure (DMC-ProNa-Fe6, the molar ratio of free pendant groups to pendant groups forming the crosslinked structure was 100:from 3 to 6) was produced as a gray solid (429 mg, yield 91%) in the same manner as in Example 10 except that 11.7 mL of dimethyl sulfoxide was used to dissolve the modified cellulose (DMC-Pro-III), and 0.6 mL of the dimethyl sulfoxide solution of anhydrous iron(III) chloride (10 mg/mL) as a crosslinker was used (the crosslinker: 37 μmol, used in an amount of about 6 mol% of DMC-Pro-III). The IR spectrum of DMC-ProNa-Fe6 is shown in FIG. 4.

Example 12: Synthesis of Crosslinked Structure (DMC-ProNa-Fe10)

A crosslinked structure (DMC-ProNa-Fe10, the molar ratio of free pendant groups to pendant groups forming the crosslinked structure was 100:from 5 to 10) was produced as a gray solid (449 mg, yield 96%) in the same manner as in Example 10 except that 11.3 mL of dimethyl sulfoxide was used to dissolve the modified cellulose (DMC-Pro-III), and 1.0 mL of the dimethyl sulfoxide solution of anhydrous iron(III) chloride (10 mg/mL) as a crosslinker was used (the crosslinker: 62 μmol, used in an amount of about 10 mol% of DMC-Pro-III). The IR spectrum of DMC-ProNa-Fe10 is shown in FIG. 4.

Example 13: Synthesis of Crosslinked Structure (PVA-ProEpo3)

In a nitrogen atmosphere, poly(vinyl alcohol) (I') (degree of saponification: 99%, 1.0 g, 22.7 mmol) was mixed with dimethyl sulfoxide (122 mL) in a two-necked eggplant-shaped flask and dissolved by stirring at 80°C. DMAP (4.55 g, 37.3 mmol), N-Boc-L-proline (24.3 g, 113 mmol), and EDC·HCl (8.71 g, 45.4 mmol) were added with ice-bath cooling, and the mixture was stirred at room temperature for 24 hours. The deposited precipitate was collected by filtration.

In a nitrogen atmosphere, the resulting precipitate and dichloromethane (122 mL) were added to a two-necked eggplant-shaped flask and the precipitate was dissolved at room temperature. DMAP (2.28 g, 18.7 mmol), N-Boc-L-proline (5.83 g, 27.2 mmol), and EDC·HCl (4.36 g, 22.7 mmol) were added, and the mixture was stirred at room temperature for 24 hours. The reaction solution was washed with water, then dried over sodium sulfate, and concentrated with an evaporator. The resulting solid was dried in vacuo, and a modified PVA (PVA-Pro-II) (a modified PVA having a repeating unit represented by Formula (PVA-Pro-II) and containing a repeating unit having an acetate group, the latter repeating unit contained in a range of 1% or less) was produced as a brown solid (5.4 g, yield 99%).

From the results of $^1$H-NMR measurement, the degree of substitution of the hydroxyl group to N-Boc-proline was estimated to be 95 mol% or greater.

[Chem. 27]

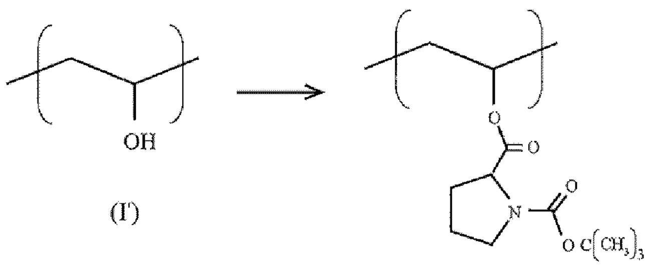

(I')

PVA-Pro-II

(PVA-Pro-II)

$^1$H-NMR (500 MHz, $CDCl_3$, 55°C): δ 4.65-5.30 (br, 1H), 4.10-4.35 (br, 1H), 3.25-3.60 (br, 2H), 1.65-2.30 (br, 6H), 1.41 (br, 9H)

In a nitrogen atmosphere, trifluoroacetic acid (60 mL) and the modified PVA (PVA-Pro-II) (4.8 g, 20 mmol) were added to a two-necked eggplant-shaped flask and the mixture was stirred at room temperature for 7 hours. Diethyl ether was added to reprecipitate a solid, and the precipitated solid was collected by centrifugation and washed with diethyl ether. The washed solid was then dried in vacuo, and a modified PVA (PVA-Pro-III) (a modified PVA having a repeating unit represented by Formula (PVA-Pro-III) and containing a repeating unit having an acetate group, the latter repeating unit contained in a range of 1% or less) was produced as a light-brown solid (5.0 g, yield 99%). The results of $^1$H-NMR

measurement of PVA-Pro-III are shown below.

[Chem. 28]

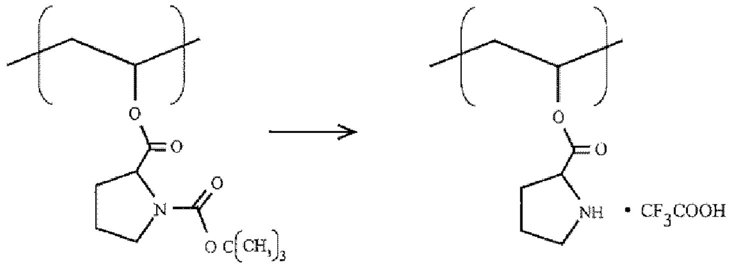

PVA-Pro-II PVA-Pro-III

(PHA-Pro-III)
$^1$H-NMR (500 MHz, $D_2O$, r.t.): δ 4.85 (br, overlapped with HDO), 4.35-4.65 (br, 1H), 3.30-3.55 (br, 2H), 2.35-2.60 (br, 1H), 1.60-2.30 (br, 5H)

In a nitrogen atmosphere, the modified PVA (PVA-Pro-III) (2.0 g, 7.8 mmol) and dimethyl sulfoxide (44 mL) were added to a two-necked eggplant-shaped flask and the mixture was stirred for 20 minutes. Carbon disulfide (3.0 mL, 50 mmol) and a 10% tetramethylammonium hydroxide methanol solution (16.0 mL, 16.0 mmol) were added dropwise with ice-bath cooling, and the mixture was stirred for 7 hours while the temperature was raised to room temperature. Ethanol was added to reprecipitate a solid, and the precipitated solid was collected by centrifugation and washed with ethanol. The washed solid was then dried in vacuo, and a modified PVA (PVA-Pro) (a modified PVA having a repeating unit represented by Formula (PVA-Pro) and containing a repeating unit having an acetate group, the latter repeating unit contained in a range of 1% or less) was produced as a light-brown solid (1.7 g, yield 76%). The IR spectrum of PVA-Pro is shown in FIG. 5. A portion of the resulting modified PVA (PVA-Pro) was used as Comparative Example 3.

[Chem. 29]

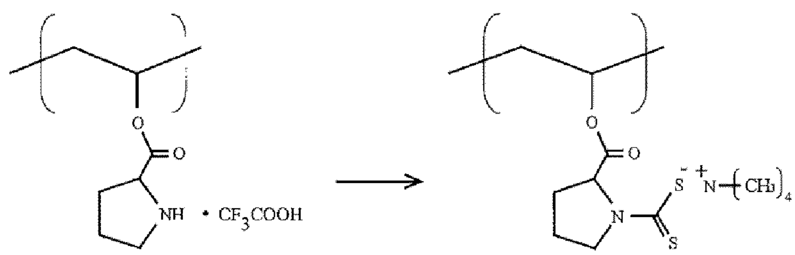

PVA-Pro-III PVA-Pro

(PVA-Pro)
$^1$H-NMR (500 MHz, $D_2O$, r.t.): δ 4.85 (br, overlapped with HDO), 3.65-3.90 (br, 3H), 3.10 (s, 12H), 2.20-2.45 (br, 1H), 1.65-2.15 (br, 5H)

In a nitrogen atmosphere, dimethyl sulfoxide (11 mL) was added to the modified PVA (PVA-Pro) (500 mg, 1.72 mmol) in a two-necked eggplant-shaped flask to dissolve the modified PVA. Polyethylene glycol diglycidyl ether as a crosslinker (25 mg, about 50 μmol, the amount of the crosslinker was about 3 mol% of PVA-Pro) was further added, and the mixture was stirred for 24 hours. Ethanol was added to reprecipitate a solid, and the precipitated solid was collected by centrifugation and washed with ethanol. The washed solid was then dried in vacuo, and a crosslinked structure (PVA-Pro-Epo3) (a crosslinked structure having repeating units represented by Formulas (IV'-1-1) and (IV'-2-1), the molar ratio of free pendant groups to pendant groups forming the crosslinked structure was 100:from 1.5 to 3) was produced as a light-brown solid (383 mg, yield 73%). The IR spectrum of PVA-Pro-Epo3 is shown in FIG. 5.

[Chem. 30]

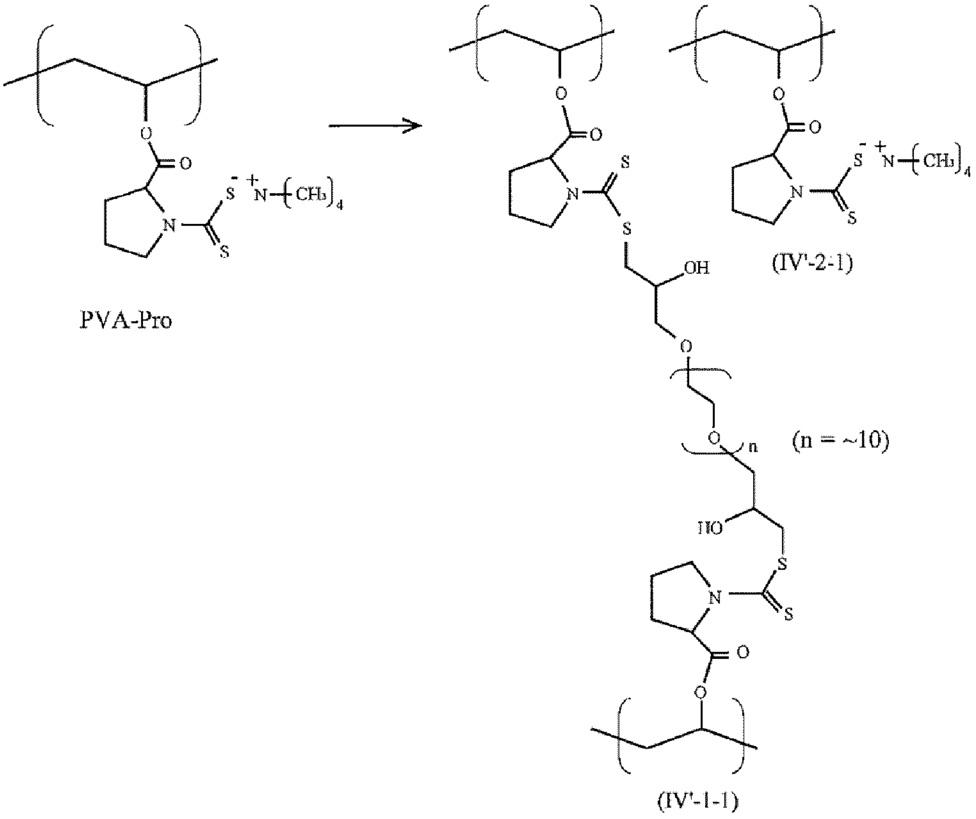

PVA-Pro

(IV'-2-1)

(n = ~10)

(IV'-1-1)

PVA-Pro-Epo3

Example 14: Synthesis of Crosslinked Structure (DMC-ProLi-Epo3)

A salt (500 mg, 0.628 mmol) of the modified cellulose (DMC-Pro-III) produced in the same manner as in Example 1 was placed in a two-necked eggplant-shaped flask in a nitrogen atmosphere, and dimethyl sulfoxide (6.3 mL) was added to this to dissolve the modified cellulose. The mixture was cooled to about 10°C, and carbon disulfide (0.57 mL, 9.4 mmol) was added. Lithium t-butoxide (302 mg, 3.77 mmol) was added, and the mixture was stirred for 4 hours while the temperature was raised to 25°C. To the mixture, 1.0 mL of a dimethyl sulfoxide solution of polyethylene glycol diglycidyl ether (9.4 mg/mL) as a crosslinker was added (the crosslinker: about 19 μmol, used in an amount of about 3.0 mol% of DMC-Pro-III), and the mixture was stirred for 4 hours. Tetrahydrofuran was added to reprecipitate a solid, and the precipitated solid was collected by centrifugation and washed with tetrahydrofuran. The washed solid was then dried in vacuo, redispersed in methanol, collected by centrifugation, and washed with methanol. The washed solid was then dried in vacuo, and a crosslinked structure (DMC-ProLi-Epo3) (a crosslinked structure having repeating units represented by Formulas (IV-1-7) and (IV-2-7), the molar ratio of free pendant groups to pendant groups forming the crosslinked structure was 100:from 0.5 to 1) was produced as a pale-yellow solid (79 mg, yield 18%). The IR spectrum of DMC-ProLi-Epo3 is shown in FIG. 6.

[Chem. 31]

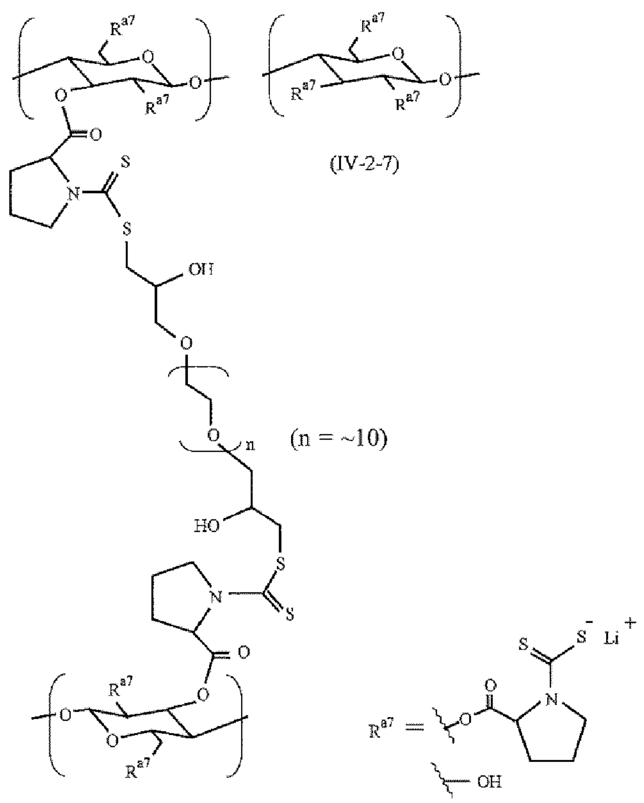

(IV-2-7)

(n = ~10)

(IV-1-7)

DMC-ProLi-Epo3

Example 15: Synthesis of Crosslinked Structure (DMC-ProLi-Epo6)

A crosslinked structure (DMC-ProLi-Epo6, the molar ratio of free pendant groups to pendant groups forming the crosslinked structure was 100:from 1 to 2) was produced as a pale-yellow solid (152 mg, yield 35%) in the same manner as in Example 14 except that the concentration of the dimethyl sulfoxide solution of polyethylene glycol diglycidyl ether as a crosslinker was increased from 9.4 mg/mL to 18.9 mg/mL (the crosslinker: about 38 μmol, used in an amount of about 6 mol% of DMC-Pro-III). The IR spectrum of DMC-ProLi-Epo6 is shown in FIG. 6.

Example 16: Synthesis of Crosslinked Structure (DMC-ProLi-Epo9)

A crosslinked structure (DMC-ProLi-Epo9, the molar ratio of free pendant groups to pendant groups forming the crosslinked structure was 100:from 1.5 to 3) was produced as a white solid (237 mg, yield 54%) in the same manner as in Example 14 except that the concentration of the dimethyl sulfoxide solution of polyethylene glycol diglycidyl ether as a crosslinker was increased from 9.4 mg/mL to 28.2 mg/mL (the crosslinker: about 56 μmol, used in an amount of about 9 mol% of DMC-Pro-III). The IR spectrum of DMC-ProLi-Epo9 is shown in FIG. 6.

Comparative Example 4: Synthesis of Modified Cellulose (DMC-ProLi)

A salt (500 mg, 0.628 mmol) of the modified cellulose (DMC-Pro-III) produced in the same manner as in Example 1 was placed in a two-necked eggplant-shaped flask and dissolved in dimethyl sulfoxide (6.3 mL) in a nitrogen atmosphere. The mixture was cooled to about 10°C, and carbon disulfide (0.57 mL, 9.4 mmol) was added. Lithium t-butoxide (302 mg, 3.77 mmol) was added, and the mixture was stirred for 4 hours while the temperature was raised to room temperature. Tetrahydrofuran was added to reprecipitate a solid, and the precipitated solid was collected by centrifugation, washed with tetrahydrofuran, and dried in vacuo. The resulting individual was re-dissolved in ethanol, and diethyl ether was added to reprecipitate. The resulting solid was collected by centrifugation and washed with diethyl ether. The washed solid was then dried in vacuo, and a modified cellulose (DMC-ProLi) (a polymer having a repeating unit represented by

Formula (IV-2-8), the molar ratio of free pendant groups to pendant groups forming a crosslinked structure was 100:0) was produced as a pale-yellow solid (114 mg, 26%). The IR spectrum of DMC-ProLi is shown in FIG. 6.

[Chem. 32]

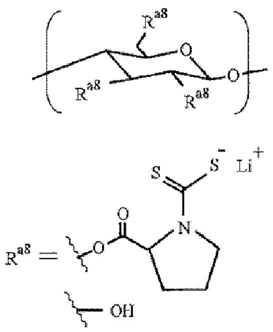

(IV-2-8)

DMC-ProLi

(DMC-ProLi)
$^1$H-NMR (500 MHz, $D_2O$, r.t.): $\delta$ 4.40-5.70 (br, overlapped with HDO), 3.35-4.40 (br), 1.40-2.80 (br)

Example 17: Synthesis of Crosslinked Structure (DMC-ProK-Epo3)

A salt (500 mg, 0.628 mmol) of the modified cellulose (DMC-Pro-III) produced in the same manner as in Example 1 was placed in a two-necked eggplant-shaped flask in a nitrogen atmosphere, and dimethyl sulfoxide (6.3 mL) was added to this to dissolve the modified cellulose. The mixture was cooled to about 10°C, and carbon disulfide (0.57 mL, 9.4 mmol) was added. Potassium t-butoxide (423 mg, 3.77 mmol) was added, and the mixture was stirred for 4 hours while the temperature was raised to 25°C. To the mixture, 1.0 mL of a dimethyl sulfoxide solution of polyethylene glycol diglycidyl ether (9.4 mg/mL) as a crosslinker was added (the crosslinker: about 19 $\mu$mol, used in an amount of about 3.0 mol% of DMC-Pro-III), and the mixture was stirred for 4 hours. Ethanol was added to reprecipitate a solid, and the precipitated solid was collected by centrifugation and washed with ethanol. The washed solid was then dried in vacuo, and a crosslinked structure (DMC-ProK-Epo3) (a crosslinked structure having repeating units represented by Formulas (IV-1-8) and (IV-2-9), the molar ratio of free pendant groups to pendant groups forming the crosslinked structure was 100:from 0.5 to 1) was produced as a white solid (320 mg, yield 64%). The IR spectrum of DMC-ProK-Epo3 is shown in FIG. 7.

[Chem. 33]

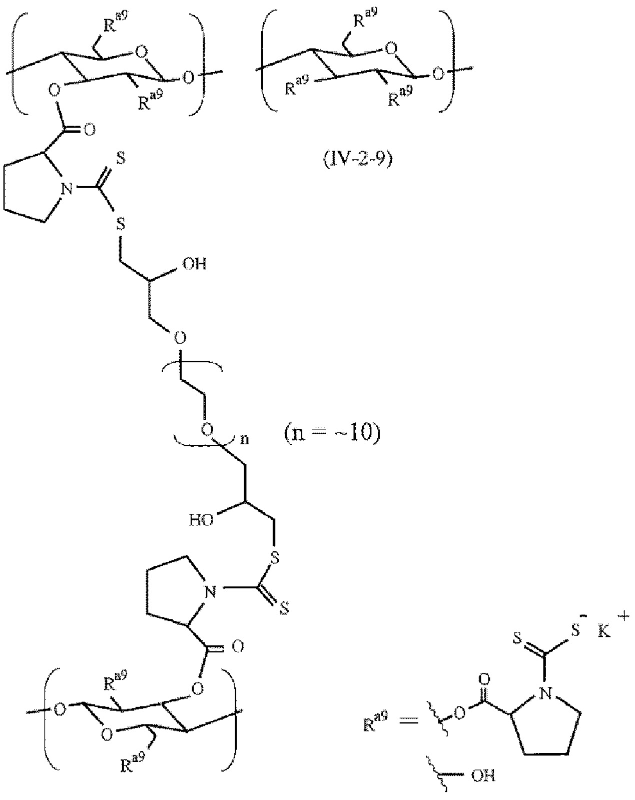

(IV-2-9)

(IV-1-8)

DMC-ProK-Epo3

Example 18: Synthesis of Crosslinked Structure (DMC-ProK-Epo6)

A crosslinked structure (DMC-ProK-Epo6, the molar ratio of free pendant groups to pendant groups forming the crosslinked structure was 100:from 1 to 2) was produced as a white solid (336 mg, yield 67%) in the same manner as in Example 17 except that the concentration of the dimethyl sulfoxide solution of polyethylene glycol diglycidyl ether as a crosslinker was increased from 9.4 mg/mL to 18.9 mg/mL (the crosslinker: about 38 μmol, used in an amount of about 6 mol% of DMC-Pro-III). The IR spectrum of DMC-ProK-Epo6 is shown in FIG. 7.

Example 19: Synthesis of Crosslinked Structure (DMC-ProK-Epo9)

A crosslinked structure (DMC-ProK-Epo9, the molar ratio of free pendant groups to pendant groups forming the crosslinked structure was 100:from 1.5 to 3) was produced as a white solid (428 mg, yield 86%) in the same manner as in Example 17 except that the concentration of the dimethyl sulfoxide solution of polyethylene glycol diglycidyl ether as a crosslinker was increased from 9.4 mg/mL to 28.2 mg/mL (the crosslinker: about 56 μmol, used in an amount of about 9 mol% of DMC-Pro-III). The IR spectrum of DMC-ProK-Epo9 is shown in FIG. 7.

Comparative Example 5: Synthesis of Modified Cellulose (DMC-ProK)

A salt (500 mg, 0.628 mmol) of the modified cellulose (DMC-Pro-III) produced in the same manner as in Example 1 was placed in a two-necked eggplant-shaped flask and dissolved in dimethyl sulfoxide (6.3 mL) in a nitrogen atmosphere. The mixture was cooled to about 10°C, and carbon disulfide (0.57 mL, 9.4 mmol) was added. Potassium t-butoxide (423 mg, 3.77 mmol) was added, and the mixture was stirred for 4 hours while the temperature was raised to room temperature. 2-Propanol was added to reprecipitate a solid, and the precipitated solid was collected by centrifugation and washed with 2-propanol. The washed solid was then dried in vacuo, and a modified cellulose (DMC-ProK) (a polymer having a repeating unit represented by Formula (IV-2-10), the molar ratio of free pendant groups to pendant groups forming a crosslinked structure was 100:0) was produced as a white solid (414 mg, yield 83%). The IR spectrum of DMC-ProK is shown in FIG. 7.

[Chem. 34]

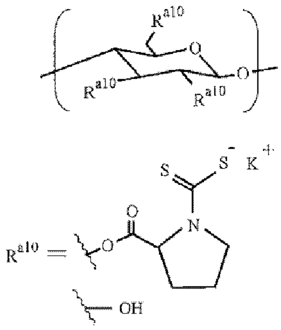

(IV-2-10)

DMC-ProK

(DMC-ProK)
$^1$H-NMR (500 MHz, $D_2O$, r.t.): δ 4.40-5.70 (br, overlapped with HDO), 3.35-4.40 (br), 1.40-2.80 (br)

Recovery Percentage of Metal

For the crosslinked structures produced in the examples, the recovery percentages of metals were evaluated by the following method.

In a 100-mL centrifuge tube, 10 mL of a metal ion test solution was placed, 5 mg of the crosslinked structure classified into a particle size of 212 to 600 μm was added to the centrifuge tube, and the content of the tube was stirred at 25°C and 200 rpm for 20 minutes. The suspension was then filtered through a membrane filter (nitrocellulose, pore size 0.45 μm), and the metal ion concentration in the filtrate ($C_e$: mol/L) was quantified with an ICP emission spectrometer (iCAP 6300 available from Thermo Fischer Scientific). The initial concentration of the metal ion in the test solution was defined as $C_0$ (mol/L), and the recovery percentage (%) of the metal ion was calculated from the following equation:

$$\text{Recovery percentage} = (C_0 - C_e)/C_0 \times 100$$

The metal ion test solution was prepared by diluting a standard solution of a metal ion with a hydrochloric acid aqueous solution or a nitric acid aqueous solution to give a metal ion concentration of 10 μmol/L and a pH of 3.

For standard solutions of palladium (Pd(II)), platinum (Pt(IV)), silver (Ag(I)), gold (Au(III)), vanadium (V(IV)), manganese (Mn(II)), zinc (Zn(II)), aluminum (Al(III)), lead (Pb(II)), arsenic (As(III)), bismuth (Bi(II)), sodium (Na(I)), potassium (K(I)), magnesium (Mg(II)), calcium (Ca(II)), strontium (Sr(II)), barium (Ba(II)), and selenium (Se(IV)), standard solutions (1000 mg/L) available from Kanto Chemical Co., Inc. were used.

For standard solutions of cobalt (Co(II)), nickel (Ni(II)), copper (Cu(II)), iron (Fe(III)), and cadmium (Cd(II)), standard solutions (1000 mg/L) available from Wako Pure Chemical Industries, Ltd. were used.

For a standard solution of Ir(III), a standard solution available from Across Organics was used.

The results are shown in Tables 1 and 2. [Table 1]

Table 1

| | Metal ion recovery percentage (%) | | | | |
|---|---|---|---|---|---|
| | Example 2 | Example 5 | Example 9 | Example 12 | Example 13 |
| | DMC-Pro-Epo6 | DMC-ProNa-Epo6 | DMC-Pro-Fe 10 | DMC-ProNa-Fe10 | PVA-Pro-Epo3 |
| Co(II) ion | 100 | 100 | 93 | 97 | 100 |
| Ir(III) ion | 100 | 100 | 90 | 95 | 100 |
| Ni(II) ion | 100 | 100 | 96 | 98 | 100 |
| Pd(II) ion | 100 | 100 | 100 | 100 | 100 |

(continued)

| | Metal ion recovery percentage (%) | | | | |
|---|---|---|---|---|---|
| | Example 2 | Example 5 | Example 9 | Example 12 | Example 13 |
| | DMC-Pro-Epo6 | DMC-ProNa-Epo6 | DMC-Pro-Fe 10 | DMC-ProNa-Fe10 | PVA-Pro-Epo3 |
| Pt(IV) ion | 100 | 100 | 100 | 100 | 100 |
| Cu(II) ion | 100 | 100 | 99 | 99 | 100 |
| Ag(I) ion | 100 | 100 | 100 | 100 | 100 |
| Au(III) ion | 100 | 100 | 100 | 100 | 100 |
| V(IV) ion | 100 | 100 | 86 | 92 | 100 |
| Mn(II) ion | 7 | 9 | 2 | 4 | 7 |
| Fe(III) ion | 100 | 100 | 100 | 100 | 100 |
| Zn(II) ion | 100 | 100 | 10 | 13 | 100 |
| Cd(II) ion | 100 | 100 | 98 | 99 | 100 |
| Al(III) ion | 0 | 1 | 0 | 1 | 1 |
| Pb(II) ion | 100 | 100 | 100 | 100 | 100 |
| As(III) ion | 100 | 100 | 98 | 99 | 100 |
| Bi(II) ion | 100 | 100 | 98 | 99 | 100 |
| Se(IV) ion | 100 | 100 | 100 | 100 | 100 |
| Na(I) ion | 0 | 0 | 0 | 0 | 0 |
| K(I) ion | 0 | 0 | 0 | 0 | 0 |
| Mg(II) ion | 0 | 0 | 5 | 7 | 0 |
| Ca(II) ion | 0 | 0 | 0 | 0 | 0 |
| Sr(II) ion | 0 | 0 | 0 | 0 | 0 |
| Ba(II) ion | 0 | 1 | 3 | 5 | 1 |

[Table 2]

Table 2

| | Metal ion recovery percentage (%) | |
|---|---|---|
| | Example 16 | Example 19 |
| | DMC-ProLi-Epo9 | DMC-ProK-Epo9 |
| Co(II) ion | 100 | 100 |
| Ir(III) ion | 100 | 100 |
| Ni(II) ion | 100 | 100 |
| Pd(II) ion | 100 | 100 |
| Pt(IV) ion | 100 | 100 |
| Cu(II) ion | 100 | 100 |
| Ag(I) ion | 100 | 100 |
| Au(III) ion | 100 | 100 |
| V(IV) ion | 100 | 100 |
| Mn(II) ion | 5 | 8 |

(continued)

| | Metal ion recovery percentage (%) | |
|---|---|---|
| | Example 16 | Example 19 |
| | DMC-ProLi-Epo9 | DMC-ProK-Epo9 |
| Fe(III) ion | 100 | 100 |
| Zn(II) ion | 100 | 100 |
| Cd(II) ion | 100 | 100 |
| Al(III) ion | 0 | 1 |
| Pb(II) ion | 100 | 100 |
| As(III) ion | 100 | 100 |
| Bi(II) ion | 100 | 100 |
| Se(IV) ion | 100 | 100 |
| Na(I) ion | 0 | 0 |
| K(I) ion | 0 | 0 |
| Mg(II) ion | 0 | 0 |
| Ca(II) ion | 0 | 0 |
| Sr(II) ion | 0 | 0 |
| Ba(II) ion | 0 | 1 |

Tables 1 and 2 show that the crosslinked structure of the present disclosure can selectively recover a metal ion classified as a soft acid or an intermediate acid in the HSAB theory.

Evaluation of Solubility in Water

For the crosslinked structures produced in the examples and the modified polymers as Comparative Examples 1 to 3, the solubility in water was evaluated by the following method.

That is, 2 mL of water and 5 mg of the crosslinked structure or the modified polymer were added to a test tube and stirred at room temperature (25°C) for 10 minutes or 12 hours. After completion of stirring, the test tube was allowed to stand and the state of the content was visually observed, and the solubility was evaluated according to the following criteria. The results are shown in Tables 3 and 4.

Evaluation Criteria

Insoluble: The same volume of precipitate is observed in the test tube with a stirring time of 10 minutes (referred to as the "test tube (10 minutes)") and in the test tube with a stirring time of 12 hours (referred to as the "test tube (12 hours)").

Poorly soluble: A precipitate is observed in the test tube (10 minutes) and the test tube (12 hours), but the volume of the precipitate in the test tube (12 hours) is less than that of the precipitate in the test tube (10 minutes).

Soluble: A precipitate is observed in the test tube (10 minutes), but no precipitate is observed in the test tube (12 hours).

Easily soluble: No precipitate is observed in the test tube (10 minutes) and the test tube (12 hours).

Evaluation of Saturated Adsorption Capacity for Toxic Metal

For the crosslinked structures produced in the examples and the modified polymers as Comparative Examples 1 to 3, the saturated adsorption capacity was evaluated by the following method (batch method).

In a 100-mL centrifuge tube, 10 mL of a solution containing a toxic metal ion and 20 mg of the crosslinked structure or the modified polymer classified into a particle size of 212 to 600 μm were added, and the content of the tube was stirred at 25°C and 200 rpm for 20 minutes.

The suspension was filtered through a membrane filter (nitrocellulose, pore size 0.45 μm), and the metal ion concentration in the filtrate ($C_e$: mol/L) was quantified with an ICP emission spectrometer (iCAP 6300 available from Thermo Fischer Scientific Inc.). The initial concentration of the metal ion in the solution was defined as $C_0$ (mol/L), the initial volume of the solution containing the metal ion was defined as $V_0$ (L), the weight of the crosslinked structure used was defined as m (kg), and the adsorption capacity (mol/kg) was calculated from the following equation:

$$\text{Adsorption capacity} = (C_0 - C_e) \times V_0/m$$

For the solution containing the toxic metal ion, a nitric acid aqueous solution with an arsenic(III) concentration of 1 mmol/L and a pH of 3 prepared by diluting an arsenic(III) standard solution with a nitric acid aqueous solution was used. The results are shown in Tables 3 and 4.

[Table 3]

Table 3

| | | Solubility in water | Saturated adsorption amount (μmol/g) of arsenic |
|---|---|---|---|
| Example 1 | DMC-Pro-Epo3 | Insoluble | 697 |
| Example 2 | DMC-Pro-Epo6 | Insoluble | 712 |
| Example 3 | DMC-Pro-Epo9 | Insoluble | 591 |
| Example 4 | DMC-ProNa-Epo3 | Insoluble | 767 |
| Example 5 | DMC-ProNa-Epo6 | Insoluble | 691 |
| Example 6 | DMC-ProNa-Epo9 | Insoluble | 673 |
| Example 7 | DMC-Pro-Fe3 | Poorly soluble | 430 |
| Example 8 | DMC-Pro-Fe6 | Insoluble | 410 |
| Example 9 | DMC-Pro-Fe10 | Insoluble | 400 |
| Example 10 | DMC-ProNa-Fe3 | Poorly soluble | 622 |
| Example 11 | DMC-ProNa-Fe6 | Insoluble | 604 |
| Example 12 | DMC-ProNa-Fe10 | Insoluble | 568 |
| Example 13 | PVA-Pro-Epo3 | Insoluble | 491 |
| Comparative example 1 | DMC-Pro | Poorly soluble | 619 |
| Comparative Example 2 | DMC-ProNa | Soluble | 300 |
| Comparative Example 3 | PVA-Pro | Easily soluble | 0 |

[Table 4]

Table 4

| | | Solubility in water | Saturated adsorption amount (μmol/g) of arsenic |
|---|---|---|---|
| Example 14 | DMC-ProLi-Epo3 | Poorly soluble | 405 |
| Example 15 | DMC-ProLi-Epo6 | Insoluble | 333 |
| Example 16 | DMC-ProLi-Epo9 | Insoluble | 397 |
| Example 17 | DMC-ProK-Epo3 | Poorly soluble | 381 |
| Example 18 | DMC-ProK-Epo6 | Insoluble | 487 |
| Example 19 | DMC-ProK-Epo9 | Insoluble | 507 |

As described above, the crosslinked structure of the present disclosure has an excellent selective metal adsorption ability derived from the dithiocarbamate group. Furthermore, the crosslinked structure of the present disclosure

has a crosslinked structure. Thus, this is found to prevent dissolution in water and allows the crosslinked structure to effectively function as a solid-phase adsorbent.

To summarize the above, configurations and variations of the present disclosure are described in addition below.

[1] A crosslinked structure formed by crosslinking a first linear polymer and a second linear polymer, the first linear polymer having a plurality of pendant groups represented by Formula (a), the second linear polymer having a plurality of pendant groups represented by Formula (a),
in which the first linear polymer and the second linear polymer are crosslinked by bonding some of the plurality of pendant groups in the first linear polymer and some of the plurality of pendant groups in the second linear polymer to each other via a crosslinker.
[2] The crosslinked structure according to [1], in which each of the plurality of pendant groups represented by Formula (a) is a pendant group represented by Formula (a-1) or a pendant group represented by Formula (a-2).
[3] The crosslinked structure according to [1], in which each of the plurality of pendant groups represented by Formula (a) is a pendant group represented by Formula (a-1') or a pendant group represented by Formula (a-2').
[4] The crosslinked structure according to any one of [1] to [3], in which among the plurality of pendant groups, a molar ratio of a group not bonded to another pendant group via a crosslinker to a group bonded to another pendant group via a crosslinker (the former/the latter) is from 100/0.5 to 100/20.
[5] The crosslinked structure according to any one of [1] to [4], in which the crosslinker is at least one crosslinker selected from an epoxy-based crosslinker, an acrylic-based crosslinker, a vinyl ether-based crosslinker, an amino-based crosslinker, and a metal-based crosslinker.
[6] The crosslinked structure according to any one of [1] to [4], in which the crosslinker is an epoxy-based crosslinker.
[7] The crosslinked structure according to any one of [1] to [4], in which the crosslinker is a metal-based crosslinker.
[8] The crosslinked structure according to any one of [1] to [7], in which the linear polymer is a linear polymer having a plurality of hydroxyl groups with two or more hydroxyl groups replaced by pendant groups represented by Formula (a).
[9] The crosslinked structure according to any one of [1] to [7], in which the linear polymer is cellulose or poly(vinyl alcohol).
[10] The crosslinked structure according to any one of [1] to [7], in which the linear polymer having a plurality of pendant groups represented by Formula (a) is a modified cellulose with a total average degree of substitution of the pendant groups represented by Formula (a) of 0.1 to 3.0.
[11] The crosslinked structure according to any one of [1] to [7], in which the linear polymer having a plurality of pendant groups represented by Formula (a) is a modified poly(vinyl alcohol) with a degree of substitution of the pendant groups represented by Formula (a) of 1 mol% or greater.
[12] The crosslinked structure according to any one of [1] to [11], in which the crosslinked structure has an adsorption capacity of 0.2 mol/kg or greater for a toxic metal ion.
[13] A valuable metal recovery material including the crosslinked structure described in any one of [1] to [12].
[14] A toxic metal removal material including the crosslinked structure described in any one of [1] to [12].
[15] A metal-trapping material including the crosslinked structure described in any one of [1] to [12].
[16] The metal-trapping material according to [15], in which the metal-trapping material is a trapping material for at least one metal selected from titanium, vanadium, manganese, iron, cobalt, nickel, copper, zinc, gallium, arsenic, selenium, cadmium, indium, lead, bismuth, ruthenium, rhodium, iridium, palladium, platinum, silver, and gold.
[17] A method for recovering a metal, the method including adsorbing a metal dissolved in an aqueous solution on the metal-trapping material described in [15] or [16] to recover the metal.
[18] A method for manufacturing a crosslinked structure described in any one of [1] to [12], the method including:

1: reacting a linear polymer (I) having a plurality of hydroxyl groups with a compound represented by Formula (2) to produce a modified polymer (II) in which two or more of the plurality of hydroxyl groups in the linear polymer (I) are replaced by groups represented by Formula (b);
2: deprotecting an imino group in the modified polymer (II) to produce a modified polymer (III) in which two or more hydroxyl groups in the linear polymer (I) are replaced by groups represented by Formula (c); and
3: reacting the modified polymer (III) with a base and a crosslinker in the presence of a sulfur compound.

Industrial Applicability

The crosslinked structure of the present disclosure can be suitably used as a trapping material for a metal whose cation is classified as a soft acid or an intermediate acid in the HSAB theory. In addition, the crosslinked structure can efficiently and selectively adsorb and recover a metal from a plant effluent and waste.

## Claims

1. A crosslinked structure formed by crosslinking a first linear polymer and a second linear polymer, the first linear polymer comprising a plurality of pendant groups represented by Formula (a), the second linear polymer comprising a plurality of pendant groups represented by Formula (a),
wherein the first linear polymer and the second linear polymer are crosslinked by bonding some of the plurality of pendant groups in the first linear polymer and some of the plurality of pendant groups in the second linear polymer to each other via a crosslinker:

[Chem. 1]

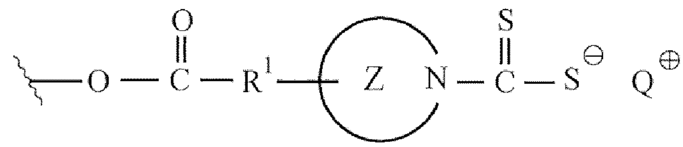

(a)

where

ring Z represents a heterocycle comprising a nitrogen atom as a heteroatom,
$R^1$ represents a single bond or an alkylene group having from 1 to 10 carbons, and
$Q^+$ represents a counter cation.

2. The crosslinked structure according to claim 1, wherein among the plurality of pendant groups, a molar ratio of a group not bonded to another pendant group via a crosslinker to a group bonded to another pendant group via a crosslinker (the former/the latter) is from 100/0.5 to 100/20.

3. The crosslinked structure according to claim 1 or 2, wherein the crosslinker is an epoxy-based crosslinker.

4. The crosslinked structure according to claim 1 or 2, wherein the crosslinker is a metal-based crosslinker.

5. The crosslinked structure according to claim 1 or 2, wherein the linear polymer is cellulose or poly(vinyl alcohol).

6. The crosslinked structure according to claim 1 or 2, wherein the linear polymer comprising a plurality of pendant groups represented by Formula (a) is a modified cellulose with a total average degree of substitution of the pendant groups represented by Formula (a) of 0.1 to 3.0.

7. The crosslinked structure according to claim 1 or 2, wherein the linear polymer comprising a plurality of pendant groups represented by Formula (a) is a modified poly(vinyl alcohol) with a degree of substitution of the pendant groups represented by Formula (a) of 1 mol% or greater.

8. A metal-trapping material comprising the crosslinked structure described in claim 1 or 2.

9. The metal-trapping material according to claim 8, wherein the metal-trapping material is a trapping material for at least one metal selected from titanium, vanadium, manganese, iron, cobalt, nickel, copper, zinc, gallium, arsenic, selenium, cadmium, indium, lead, bismuth, ruthenium, rhodium, iridium, palladium, platinum, silver, and gold.

10. A method for recovering a metal, the method comprising adsorbing a metal dissolved in an aqueous solution on the metal-trapping material described in claim 8 to recover the metal.

11. A method for manufacturing the crosslinked structure described in claim 1 or 2, the method comprising:

[1] reacting a linear polymer (I) comprising a plurality of hydroxyl groups with a compound represented by Formula (2):

[Chem. 2]

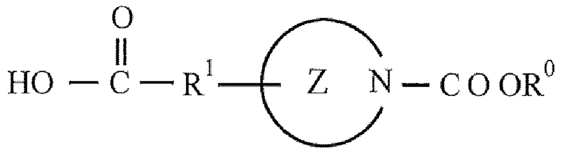

(2)

where

ring Z represents a heterocycle comprising a nitrogen atom as a heteroatom,
$R^1$ represents a single bond or an alkylene group having from 1 to 10 carbons, and
$R^0$ represents a monovalent hydrocarbon group or a monovalent heterocyclic group,

to produce a modified polymer (II) in which two or more hydroxyl groups in the linear polymer (I) are replaced by groups represented by Formula (b):

[Chem. 3]

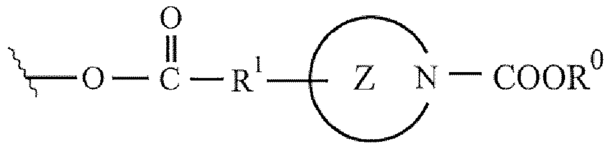

(b)

where
ring Z, $R^0$, and $R^1$ are the same as described above;
[2] deprotecting an imino group in the modified polymer (II) to produce a modified polymer (III) in which two or more hydroxyl groups in the linear polymer (I) are replaced by groups represented by Formula (c):

[Chem. 4]

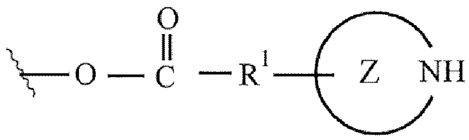

(c)

where
ring Z and $R^1$ are the same as described above; and
[3] reacting the modified polymer (III) with a base and a crosslinker in the presence of a sulfur compound.

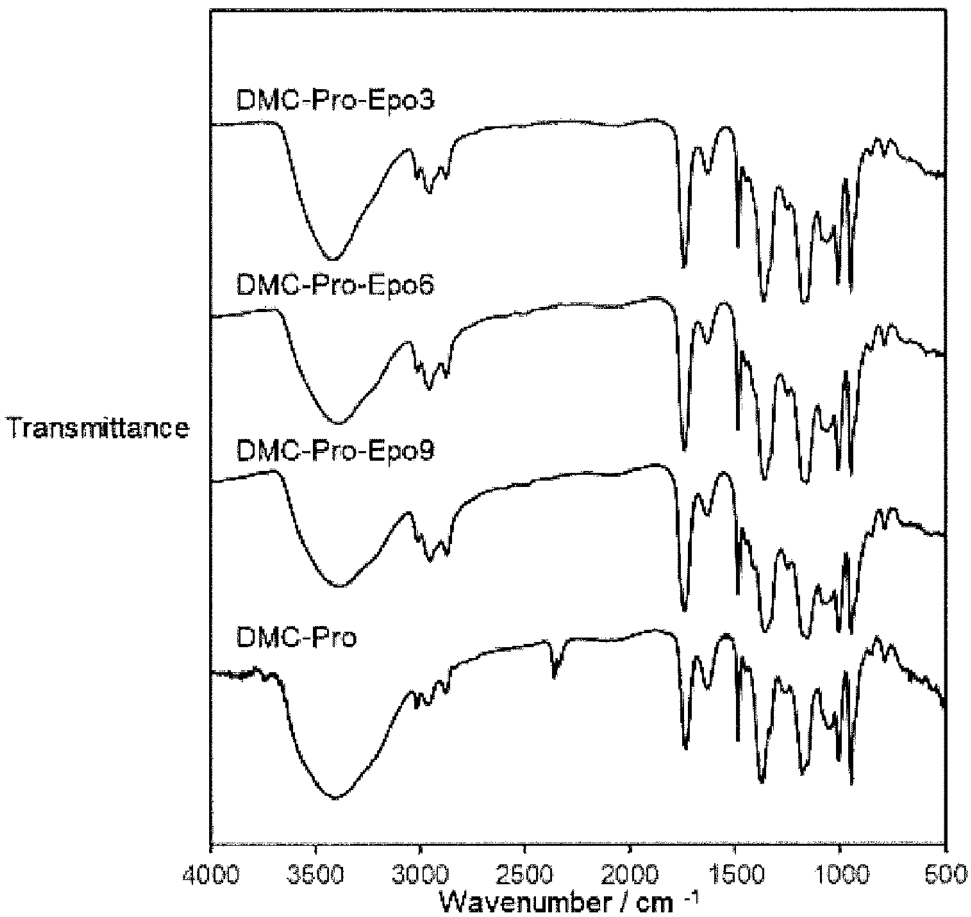
DMC-Pro-Epo3
DMC-Pro-Epo6
Transmittance
DMC-Pro-Epo9
DMC-Pro
4000
3500
3000
2500
2000
1500
1000
500
Wavenumber / cm -1

FIG. 1

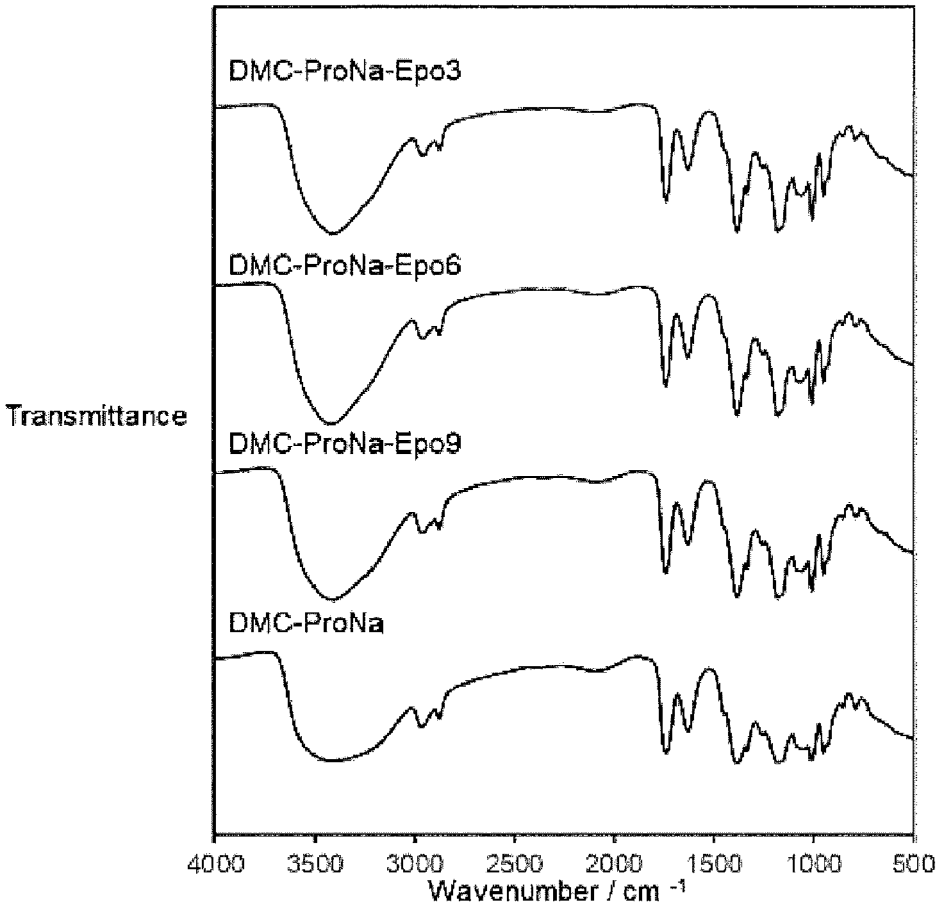
DMC-ProNa-Epo3
DMC-ProNa-Epo6
DMC-ProNa-Epo9
DMC-ProNa
Transmittance
4000
3500
3000
2500
2000
1500
1000
500
Wavenumber / cm -1

FIG. 2

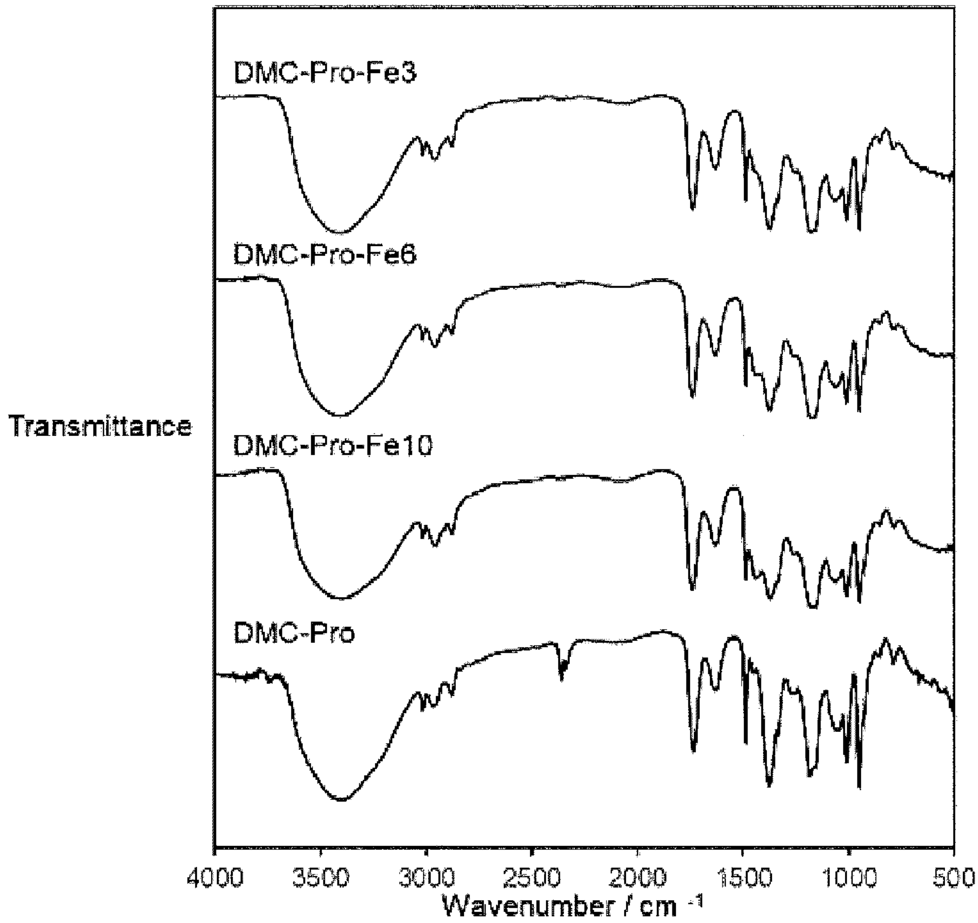
DMC-Pro-Fe3
DMC-Pro-Fe6
Transmittance
DMC-Pro-Fe10
DMC-Pro
4000
3500
3000
2500
2000
1500
1000
500
Wavenumber / cm -1

FIG. 3

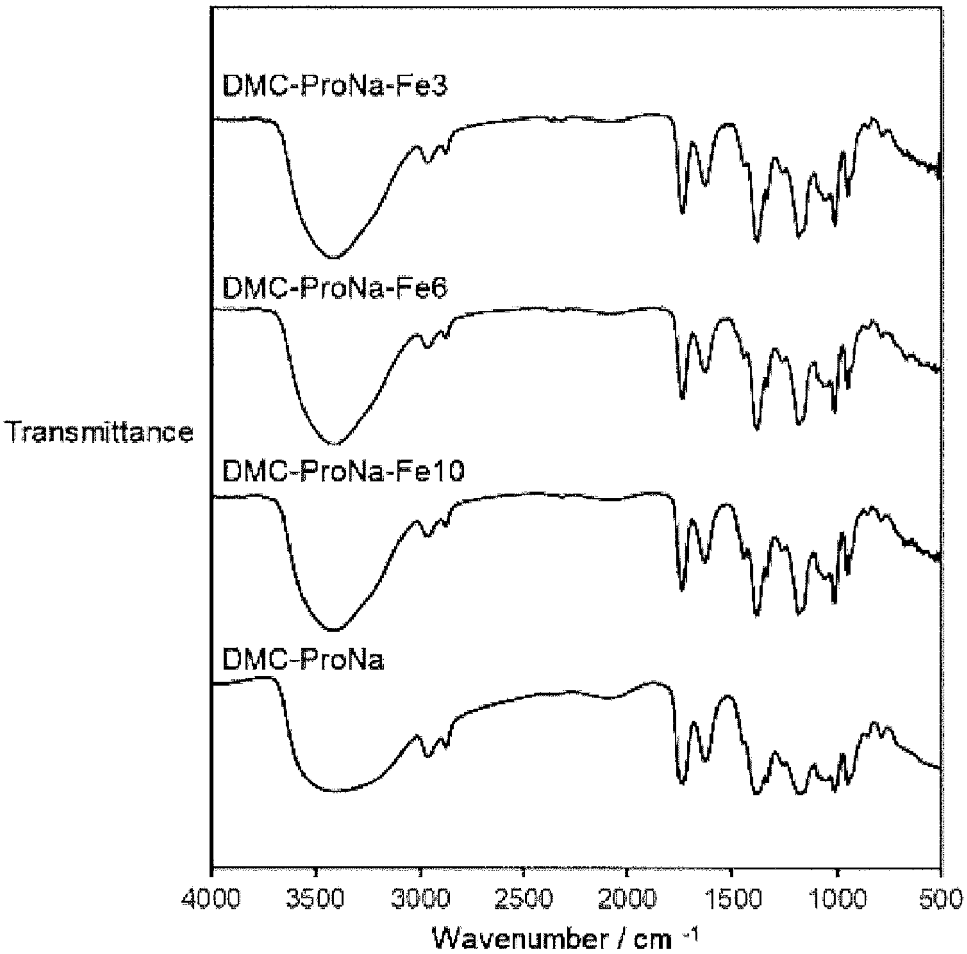
DMC-ProNa-Fe3
DMC-ProNa-Fe6
Transmittance
DMC-ProNa-Fe10
DMC-ProNa
4000
3500
3000
2500
2000
1500
1000
500
Wavenumber / cm -1

FIG. 4

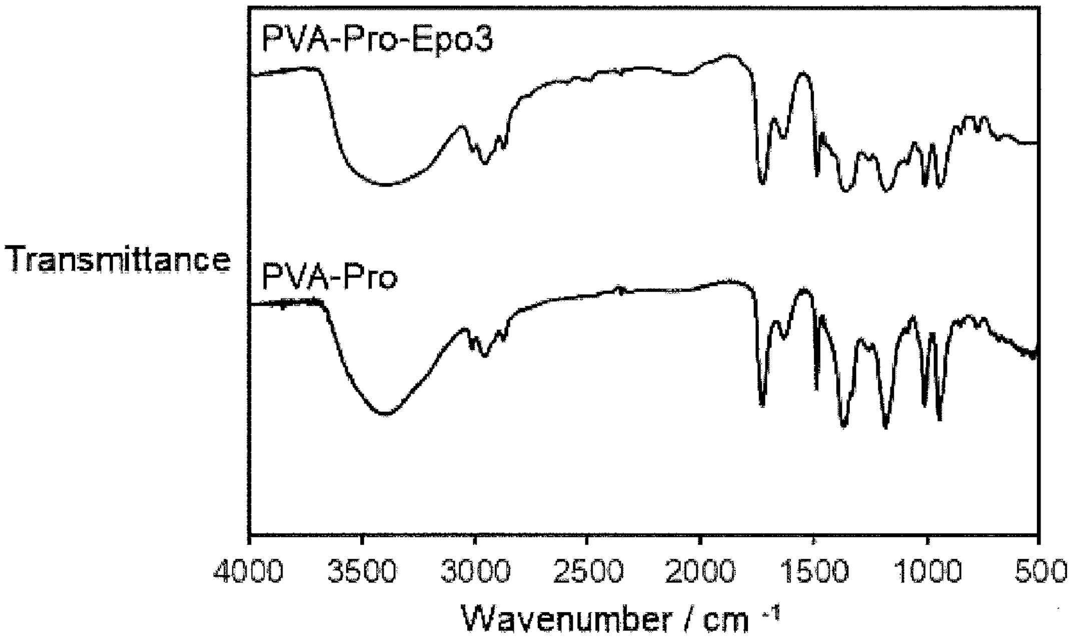
PVA-Pro-Epo3
Transmittance
PVA-Pro
4000
3500
3000
2500
2000
1500
1000
500
Wavenumber / cm -1

FIG. 5

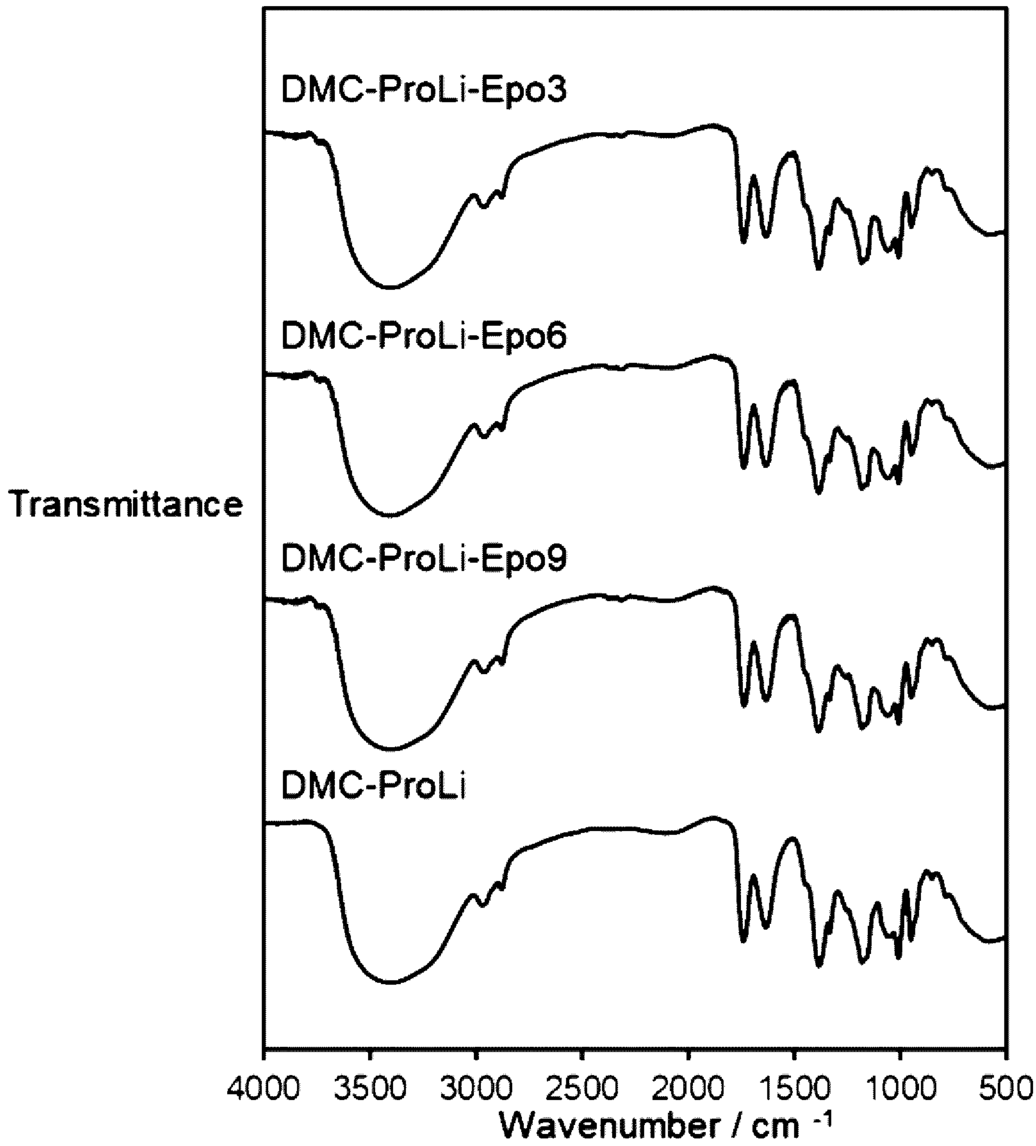
DMC-ProLi-Epo3
DMC-ProLi-Epo6
DMC-ProLi-Epo9
DMC-ProLi
Transmittance
4000 3500 3000 2500 2000 1500 1000 500
Wavenumber / cm -1

FIG. 6

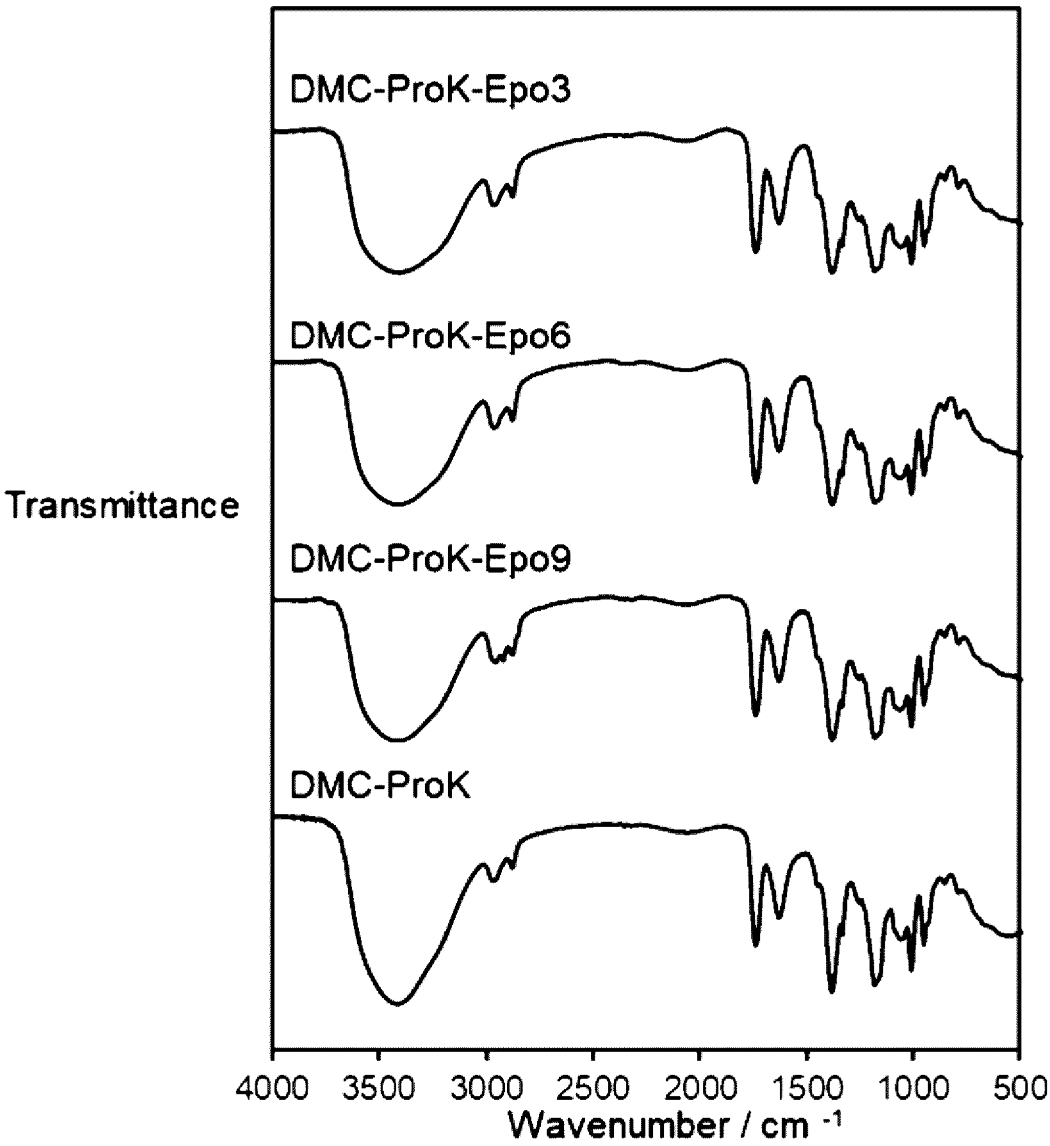
DMC-ProK-Epo3
DMC-ProK-Epo6
Transmittance
DMC-ProK-Epo9
DMC-ProK
4000 3500 3000 2500 2000 1500 1000 500
Wavenumber / cm -1

FIG. 7

**INTERNATIONAL SEARCH REPORT**

International application No.
**PCT/JP2022/034936**

**A. CLASSIFICATION OF SUBJECT MATTER**

***C08G 81/00***(2006.01)i; ***B01J 20/24***(2006.01)i; ***B01J 20/26***(2006.01)i; ***C02F 1/28***(2023.01)i; ***C08B 3/14***(2006.01)i; ***C08F 8/14***(2006.01)i; ***C08F 8/30***(2006.01)i; ***C08F 8/34***(2006.01)i; ***C08F 16/06***(2006.01)i; ***C08G 59/02***(2006.01)i; ***C08G 79/00***(2006.01)i

FI: C08G81/00; B01J20/24 B; B01J20/26 E; C02F1/28 B; C08B3/14; C08F8/14; C08F8/30; C08F8/34; C08F16/06; C08G59/02; C08G79/00

According to International Patent Classification (IPC) or to both national classification and IPC

**B. FIELDS SEARCHED**

Minimum documentation searched (classification system followed by classification symbols)

C08G81/00; B01J20/24; B01J20/26; C02F1/28; C08B3/14; C08F8/14; C08F8/30; C08F8/34; C08F16/06; C08G59/02; C08G79/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | MORITA, Futo et al. Dithiocarbamate-modified cellulose-based sorbents with high storage stability for selective removal of arsenite and hazardous heavy metals. RSC Advances [online], 2020, vol. 10, 30238<br>entire text | 1-11 |
| A | NAKAKUBO, Keisuke et al. Dithiocarbamate-modified cellulose resins: A novel adsorbent for selective removal of arsenite from aqueous media. Journal of Hazardous Materials [online], 2019, vol. 380, 120816<br>entire text | 1-11 |
| A | JP 2021-115561 A (NATIONAL UNIVERSITY CORPORATION KANAZAWA UNIVERSITY) 10 August 2021 (2021-08-10)<br>entire text | 1-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 October 2022** | **08 November 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No. **PCT/JP2022/034936**

**C. DOCUMENTS CONSIDERED TO BE RELEVANT**

| Category* | Citation of document, with indication, where appropriate, of the relevant passages | Relevant to claim No. |
|---|---|---|
| P, X | NAKAKUBO, Keisuke et al. Cross-linked dithiocarbamate-modified cellulose with enhanced thermal stability and dispersibility as a sorbent for arsenite removal. Chemosphere [online], 13 July 2022, vol. 307, 135671<br>entire text | 1-11 |
| P, A | WO 2021/245832 A1 (NATIONAL UNIVERSITY CORPORATION KANAZAWA UNIVERSITY) 09 December 2021 (2021-12-09)<br>entire text | 1-11 |

Form PCT/ISA/210 (second sheet) (January 2015)

**INTERNATIONAL SEARCH REPORT**
**Information on patent family members**

International application No.
**PCT/JP2022/034936**

| Patent document cited in search report | Publication date (day/month/year) | Patent family member(s) | Publication date (day/month/year) |
|---|---|---|---|
| JP 2021-115561 A | 10 August 2021 | (Family: none) | |
| WO 2021/245832 A1 | 09 December 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021034658 W


### Non-patent literature cited in the description


- *BUNSEKI KAGAKU,* 2003, vol. 52 (9), 811-817